# EUROPEAN PATENT APPLICATION

(11) **EP 4 676 124 A1**
(43) Date of publication of application: **07.01.2026**
(21) Application number: 24764008.9
(22) Date of filing: 29.02.2024
(51) Int. Cl.: H04W 36/08, H04W 72/0446, H04W 72/231, H04W 74/0833

(54) **TERMINAL, WIRELESS COMMUNICATION METHOD, AND BASE STATION**

(30) Priority: 02.03.2023 JP 2023032166
(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2024/007540
(87) International publication number: WO 2024/181531

(57) **Abstract**

A terminal according to one aspect of the present disclosure includes a receiving section that receives a Medium Access Control Control Element (MAC CE) related to cell switching, and a control section that controls, based on information included in the MAC CE, triggering of a random access channel (RACH) for a candidate cell. The MAC CE includes a field for indicating a RACH for an indicated candidate cell.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, radio communication systems later than Rel. 17/5G), it is assumed to control communication using a plurality of transmission/reception points (for example, a multi-TRP (MTRP) in a serving cell or control communication based on mobility among a plurality of cells (inter-cell mobility)/intra-cell mobility (inter-cell mobility) including a non-serving cell.

In cell switching, it is assumed that random access procedure (for example, RACH procedure) (or configuration of a timing advance) for a candidate cell is performed. Meanwhile, how a terminal (user terminal, User Equipment (UE)) controls UL transmission (such as control of the random access procedure and the timing advance described above) for a candidate cell poses a problem. Unless such UL transmission for a candidate cell is appropriately controlled, quality of communication in cell switching may degrade.

The present disclosure has been made in view of this respect, and has an object to provide a terminal, a radio communication method, and a base station that can appropriately perform communication even when cell switching is performed.

### Solution to Problem

A terminal according to one aspect of the present disclosure includes a receiving section that receives a Medium Access Control Control Element (MAC CE) related to cell switching, and a control section that controls, based on information included in the MAC CE, triggering of a random access channel (RACH) for a candidate cell. The MAC CE includes a field for indicating a RACH for an indicated candidate cell.

### Advantageous Effects of Invention

According to one aspect of the present disclosure, even when cell switching is performed, communication can be appropriately performed.

### Brief Description of Drawings

[FIG. 1] FIG. 1A to FIG. 1D are diagrams to show examples of multi-TRPs.
[FIG. 2] FIG. 2A and FIG. 2B are diagrams to show examples of inter-cell mobility.
[FIG. 3] FIG. 3A and FIG. 3B are diagrams to show examples of switching between a serving cell and an additional cell by L1/L2 signaling.
[FIG. 4] FIG. 4 is a diagram to show an example of configuration examples 1 to 3 when candidate cells are supported.
[FIG. 5] FIG. 5A to FIG. 5C are diagrams to show examples of a case where switching between candidate cells/a candidate cell group by L1/L2 signaling is performed in configuration examples 1 to 3 when candidate cells are supported.
[FIG. 6] FIG. 6 is a diagram to show an example of timing advance groups (TAGs) to which cells included in a cell group belong.
[FIG. 7] FIG. 7 is a diagram to show an example of a MAC CE for timing advance command.
[FIG. 8] FIG. 8A and FIG. 8B are diagrams to show examples of a timing of PDCCH monitoring.
[FIG. 9] FIG. 9 is a diagram to show an outline of L1L2-triggered mobility (LTM).
[FIG. 10] FIG. 10 is a diagram to show a PDCCH indication-based RACH (PDCCH ordered RACH) with random access response (RAR) monitoring for serving cell.
[FIG. 11] FIG. 11 is a diagram to show a PDCCH indication-based RACH (PDCCH ordered RACH) without random access response (RAR) monitoring for serving cell.
[FIG. 12] FIG. 12 is a diagram to show an example of configuration of an existing RAR format (MAC RAR).
[FIG. 13] FIG. 13 is a diagram to show an example of switching from a serving cell to a candidate cell (target cell).
[FIG. 14] FIG. 14 is a diagram to show an example of a new RAR format (MAC RAR).
[FIG. 15] FIG. 15 is a diagram to show another example of the new RAR format (MAC RAR).
[FIG. 16] FIG. 16 is a diagram to show an example of a schematic structure of a radio communication system according to one embodiment.
[FIG. 17] FIG. 17 is a diagram to show an example of a structure of a base station according to one embodiment.
[FIG. 18] FIG. 18 is a diagram to show an example of a structure of a user terminal according to one embodiment.
[FIG. 19] FIG. 19 is a diagram to show an example of a hardware structure of the base station and the user terminal according to one embodiment.
[FIG. 20] FIG. 20 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Initial Access Procedure)

In an initial access procedure, the UE (RRC_IDLE mode) performs reception of an SS/PBCH block (SSB), transmission of Msg. 1 (PRACH/random access preamble/preamble), reception of Msg. 2 (PDCCH, PDSCH including a random access response (RAR)), transmission of Msg. 3 (PUSCH scheduled by an RAR UL grant), and reception of Msg. 4 (PDCCH, PDSCH including UE contention resolution identity). Subsequently, when an ACK for Msg. 4 is transmitted from the UE by a base station (network), an RRC connection is established (RRC_CONNECTED mode).

The reception of the SSB includes PSS detection, SSS detection, PBCH-DMRS detection, and PBCH reception. The PSS detection performs detection of part of a physical cell ID (PCI), detection (synchronization) of an OFDM symbol timing, and (coarse) frequency synchronization. The SSS detection includes detection of the physical cell ID. The PBCH-DMRS detection includes detection of (part of) an SSB index in a half radio frame (5 ms). The PBCH reception includes detection of a system frame number (SFN) and a radio frame timing (SSB index), reception of configuration information for remaining minimum system information (RMSI, SIB1) reception, and recognition of whether the UE can camp on the cell (carrier).

The SSB includes a band of 20 RBs and time of 4 symbols. A transmission periodicity of the SSB is configurable from {5, 10, 20, 40, 80, 160} ms. In the half frame, a plurality of symbol locations of the SSB are defined based on a frequency range (FR1, FR2).

The PBCH includes a 56-bit payload. N repetitions of the PBCH are transmitted in a periodicity of 80 ms. N depends on the transmission periodicity of the SSB.

The system information consists of an MIB, RMSI (SIB1), and other system information (OSI) delivered by the PBCH. SIB1 includes a RACH configuration, and information for RACH procedure. A time/frequency resource relationship between the SSB and a PDCCH monitoring resource for SIB1 is configured by the PBCH.

The base station that uses beam correspondence transmits a plurality of SSBs by using a plurality of respective beams every SSB transmission periodicity. The plurality of SSBs include a plurality of respective SSB indices. The UE that has detected one SSB transmits a PRACH in a RACH occasion associated with the SSB index, and receives an RAR in an RAR window.

### (Multi-TRP)

In NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID) or may correspond to different cell IDs. The cell ID may be a physical cell ID (for example, a PCI), or may be a virtual cell ID.

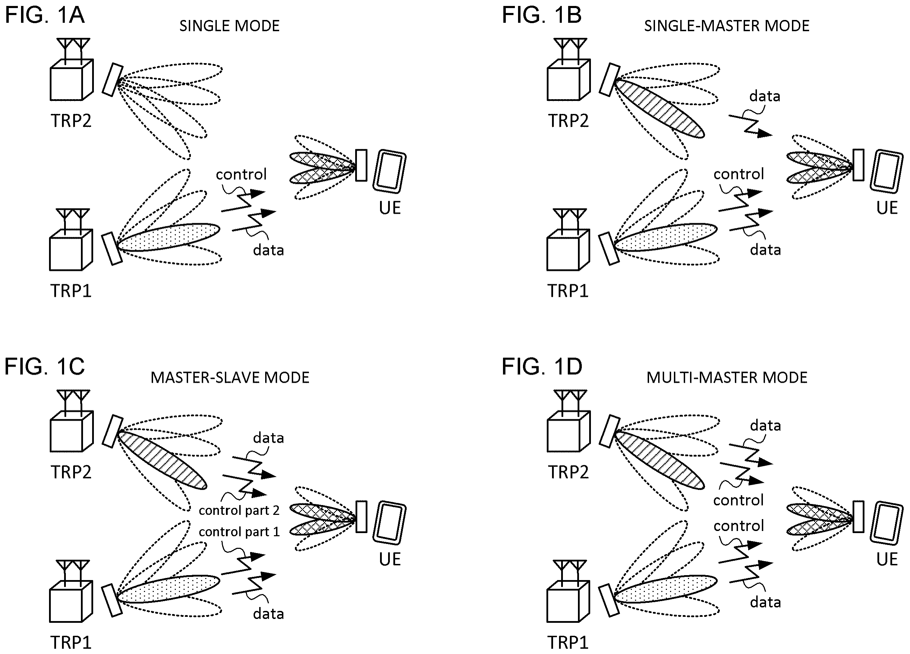

FIGS. 1A to 1D are diagrams to show examples of multi-TRP scenarios. In these examples, it is assumed that each TRP can transmit four different beams; however, this is not restrictive.

FIG. 1A shows an example of a case (which may be referred to as a single mode, a single TRP, or the like) in which only one TRP (in the present example, TRP1) out of the multi-TRP performs transmission to the UE. In this case, TRP1 transmits both of a control signal (PDCCH) and a data signal (PDSCH) to the UE.

In the present disclosure, a single-TRP mode may mean a mode when the multi-TRP (mode) is not configured.

FIG. 1B shows an example of a case (which may be referred to as a single master mode) in which only one TRP (in the present example, TRP1) out of the multi-TRP transmits a control signal to the UE, and the multi-TRP transmits a data signal thereto. The UE receives the PDSCHs transmitted from the multi-TRP, based on one piece of downlink control information (DCI).

FIG. 1C shows an example of a case (which may be referred to as a master slave mode) in which each of the multi-TRP transmits a part of a control signal to the UE, and the multi-TRP transmits a data signal thereto. In TRP1, part 1 of the control signal (DCI) may be transmitted, and in TRP2, part 2 of the control signal (DCI) may be transmitted. Part 2 of the control signal may be dependent upon part 1. The UE receives the PDSCHs transmitted from the multi-TRP, based on these parts of the DCI.

FIG. 1D shows an example of a case (which may be referred to as a multi-master mode) in which each of the multi-TRP transmits a different control signal to the UE, and the multi-TRP transmits a data signal thereto. In TRP1, a first control signal (DCI) may be transmitted, and in TRP2, a second control signal (DCI) may be transmitted. The UE receives the PDSCHs transmitted from the multi-TRP, based on these DCIs.

When a plurality of PDSCHs (which may be referred to as multi-PDSCH (multiple PDSCHs)) from the multi-TRP as shown in FIG. 1B are scheduled using one DCI, the DCI may be referred to as single DCI (S-DCI, single PDCCH). When a plurality of PDSCHs from the multi-TRP as shown in FIG. 1D are respectively scheduled using a plurality of DCIs, the plurality of DCIs may be referred to as multi-DCI (M-DCI, multi-PDCCH (multiple PDCCHs)).

From each TRP of the multi-TRP, different transport blocks (TBs)/codewords (Code Words (CWs))/different layers may be transmitted. Alternatively, from each TRP of the multi-TRP, the same TB/CW/layer may be transmitted.

As one mode of multi-TRP transmission, non-coherent joint transmission (NCJT) has been under study. In NCJT, for example, TRP1 performs modulation mapping and then layer mapping on a first codeword so as to transmit a first PDSCH by using first precoding for a first number of layers (for example, two layers). TRP2 performs modulation mapping and then layer mapping on a second codeword so as to transmit a second PDSCH by using second precoding for a second number of layers (for example, two layers).

Note that it may be defined that a plurality of PDSCHs (multi-PDSCH) to be transmitted using NCJT partially or entirely overlap in at least one of the time and frequency domains. In other words, at least one of the time and frequency resources of the first PDSCH from the first TRP and the second PDSCH from the second TRP may overlap.

It may be assumed that the first PDSCH and the second PDSCH are not in a quasi-co-location (QCL) relationship (not quasi-colocated). Reception of the multi-PDSCH may be interpreted as simultaneous reception of the PDSCHs that are not of a certain QCL type (for example, QCL type D).

In URLLC for the multi-TRP, support of PDSCH (transport block (TB) or codeword (CW)) repetition across the multi-TRP has been under study. Support of repetition schemes across the multi-TRP (URLLC schemes, for example, schemes 1, 2a, 2b, 3, and 4) in the frequency domain, the layer (spatial) domain, or the time domain has been under study. In scheme 1, the multi-PDSCH from the multi-TRP is subjected to space division multiplexing (SDM). In schemes 2a and 2b, the PDSCH from the multi-TRP is subjected to frequency division multiplexing (FDM). In scheme 2a, a redundancy version (RV) is the same for the multi-TRP. In scheme 2b, the RV may be the same or may be different for the multi-TRP. In schemes 3 and 4, the multi-PDSCH from the multi-TRP is subjected to time division multiplexing (TDM). In scheme 3, the multi-PDSCH from the multi-TRP is transmitted in one slot. In scheme 4, the multi-PDSCH from the multi-TRP is transmitted in different slots.

According to the multi-TRP scenario as described above, more flexible transmission control using a channel with satisfactory quality can be performed.

NCJT using multi-TRP/panel may use a high rank. In order to support ideal and non-ideal backhauls among a plurality of TRPs, both of the single DCI (single PDCCH, for example, FIG. 1B) and the multi-DCI (multi-PDCCH, for example, FIG. 1D) may be supported. For both of the single DCI and the multi-DCI, the maximum number of TRPs may be 2.

For single PDCCH design (mainly for the ideal backhaul), enhancement of the TCI has been under study. Each TCI code point in the DCI may correspond to one or two TCI states. A TCI field size may be the same as that of Rel. 15.

Regarding the PDCCH/CORESET defined in Rel. 15, one TCI state without a CORESET pool index (CORESETPoolIndex) (which may be referred to as TRP information (TRP Info)) is configured for one

### CORESET.

Regarding enhancement of the PDCCH/CORESET defined in Rel. 16, the CORESET pool index is configured for each CORESET in the multi-TRP based on the multi-DCI.

### (Inter-Cell Mobility)

For NR, it is studied that one or a plurality of transmission/reception points (TRPs) (multi-TRP (MTRP)) perform DL transmission to a UE. It is also studied that the UE performs UL transmission to the one or plurality of TRPs.

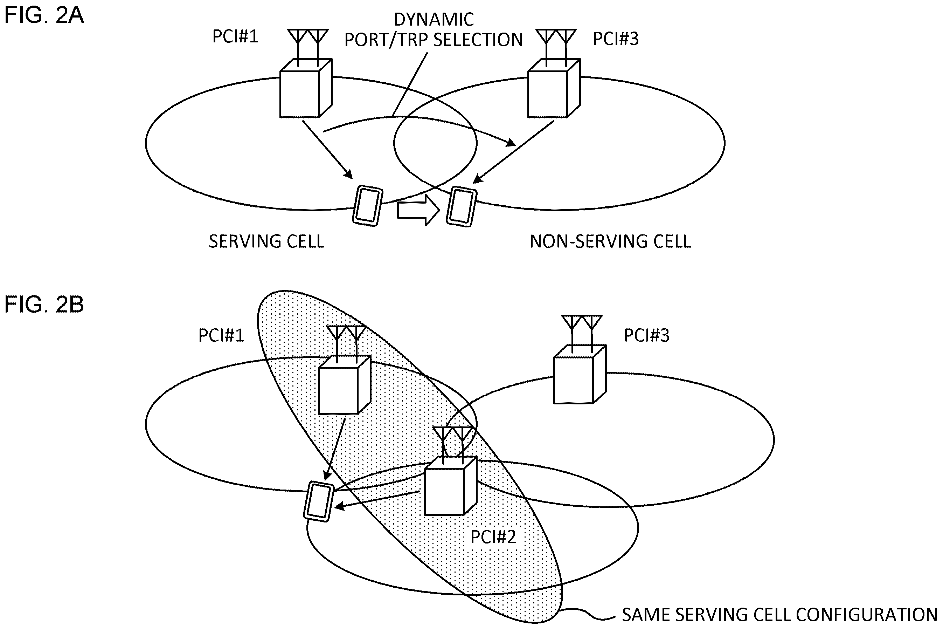

It is considered that a UE receives channels/signals from a plurality of cells/TRPs in inter-cell mobility (for example, L1/L2 inter cell mobility) (see FIGS. 2A and 2B).

FIG. 2A shows an example of inter-cell mobility with cells including a non-serving cell (for example, Single-TRP inter-cell mobility). A UE may be configured with one TRP (or a single TRP) in each cell. Here, shown is a case where the UE receives channels/signals from a base station/TRP of cell #1 being a serving cell, and a base station/TRP of cell #3 being not a serving cell (non-serving cell). For example, this corresponds to a case where the UE switches from cell #1 to cell #3 (for example, fast cell switch).

In this case, selection of a port (for example, an antenna port)/TRP may be performed dynamically. The selection of a port (for example, an antenna port)/TRP may be performed based on a TCI state indicated or updated by DCI/MAC CE. Here, shown is a case of supporting configuration of different physical cell IDs (for example, PCIs) for cell #1 and cell #3.

FIG. 2B shows an example of a multi-TRP scenario (for example, inter-cell mobility in a case of using multi-TRP (Multi-TRP inter-cell mobility)). A UE may be configured with a plurality of (for example, two) TRPs (or different CORESET pool indices) in each cell. Here, shown is a case where the UE receives channels/signals from TRP #1 and TRP 2. Here, also shown is a case where TRP #1 corresponds to physical cell ID (PCI) #1 and TRP #2 corresponds to PCI #2.

The multi-TRP (for example, TRPs #1 and #2) may be connected via ideal/non-ideal backhaul to exchange information, data, and the like. Each TRP of the multi-TRP may transmit the same or a different codeword (Code Word (CW)) and the same or a different layer. As one mode of multi-TRP transmission, non-coherent joint transmission (NCJT) may be employed as shown in FIG. 2B. Here, shown is a case where NCJT is performed between TRPs corresponding to different PCIs. Note that the same serving cell configuration may be applied/configured for TRP #1 and TRP #2.

It may be defined that a plurality of PDSCHs (multi-PDSCH) subjected to NCJT partially or completely overlap with respect to at least one of time and frequency domains. In other words, a first PDSCH from TRP #1 and a second PDSCH from TRP #2 may overlap in terms of at least one of time and frequency resources. The first PDSCH and the second PDSCH may be used for transmission of the same TB or may be used for transmission of different TBs.

It may be assumed that the first PDSCH and the second PDSCH are not in a quasi-co-location (QCL) relationship (not quasi-colocated). Reception of the multi-PDSCH may be interpreted as simultaneous reception of the PDSCHs that are not of a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI, single PDCCH)) (singlemaster mode). The one piece of DCI may be transmitted from one TRP of the multi-TRP. A structure using one piece of DCI in multi-TRP may be referred to as single-DCI based multi-TRP (mTRP/MTRP).

The plurality of PDSCHs from the multi-TRP may be scheduled by using a plurality of respective pieces of DCI (multi-DCI (M-DCI), multi-PDCCH (multiple PDCCHs)). The plurality of pieces of DCI may be transmitted from respective TRPs of the multi-TRP. A structure using a plurality of pieces of DCI in multi-TRP may be referred to as multi-DCI based multi-TRP (mTRP/MTRP).

The UE may assume to transmit, to the different TRPs, separate CSI reports related to the respective TRPs. Such CSI feedback may be referred to as separate feedback, separate CSI feedback, and the like. In the present disclosure, "separate" may be interchangeably interpreted as "independent."

In inter-cell mobility, the following scenario 1 or scenario 2 is considered. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, a candidate cell, and an additional cell may be interchangeably interpreted.

### <Scenario 1>

Scenario 1 corresponds to inter-cell mobility of the multi-TRP, for example. Note that scenario 1 may be a scenario not corresponding to inter-cell mobility of the multi-TRP. In scenario 1, for example, the following procedure is performed.
(1) The UE receives, from the serving cell, a configuration of an SSB for beam measurement of a TRP corresponding to a different PCI from the serving cell and a configuration necessary for using radio resources for data transmission and reception, including resources of the different PCI.
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. In other words, switching of the serving cells by L1/L2 is not supported. The UE is configured with a higher layer parameter related to the PCI of the non-serving cell from the serving cell. Scenario 1 may be applied in Rel. 17, for example.

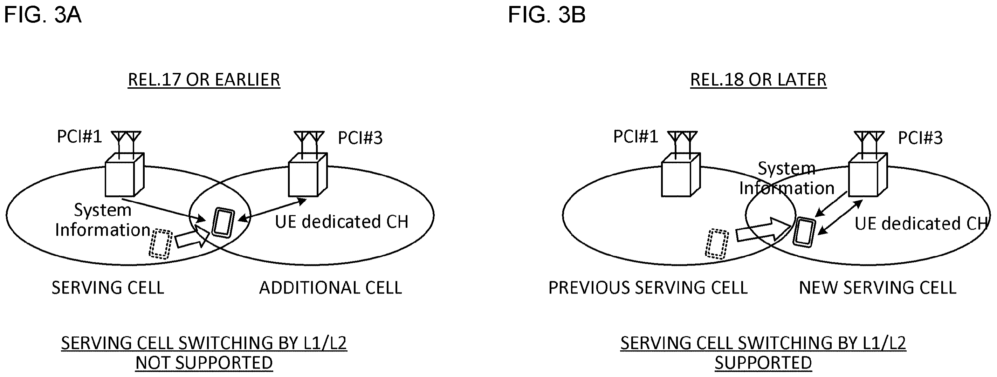

FIG. 3A is a diagram to show an example of movement of the UE in Rel. 17. A case is assumed in which the UE moves from a cell (serving cell) of PCI #1 to a cell (additional cell) (overlapping the serving cell) of PCI #3. In this case, in Rel. 17, switching of the serving cells by L1/L2 is not supported.

The additional cell is a cell having an additional PCI different from the PCI of the serving cell. The UE can receive/transmit a UE-dedicated channel from the additional cell. The UE needs to be present within coverage of the serving cell in order to receive a UE common channel (for example, system information/paging/short message). When the UE moves out of coverage of the serving cell, switching of cells is required through handover (also referred to as L3 mobility) or the like.

### <Scenario 2>

In scenario 2, L1/L2 inter-cell mobility is applied. In L1/L2 inter-cell mobility, the serving cell can be changed by using a function such as beam control without performing RRC reconfiguration. In other words, transmission and reception to and from an additional cell can be performed without performing handover (or without performing an L3 mobility procedure). For handover, RRC reconnection is required, which generates a period in which data communication cannot be performed, and thus by applying L1/L2 inter-cell mobility that does not require handover, data communication can be continued even at the time of the serving cell change. In scenario 2, for example, the following procedure is performed.
(1) The UE receives, from the serving cell, a configuration of an SSB for a cell (additional cell) having a different PCI for beam measurement/serving cell change.
(2) The UE performs beam measurement of the cell using the different PCI, and reports measurement results to the serving cell.
(3) The UE may receive a configuration (serving cell configuration) of the cell having the different PCI by higher layer signaling (for example, RRC). In other words, a preconfiguration related to serving cell change may be performed. The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18 or later versions.

FIG. 3B is a diagram to show an example of movement of the UE in Rel. 18. In Rel. 18, the serving cell is switched by L1/L2. The UE can receive/transmit a UE-dedicated channel/common channel from/to a new serving cell. The UE may go out of the coverage of the previous serving cell.

### (Configuration of Candidate Cells)

In L1/L2 inter-cell mobility, in addition to the serving cell, candidate cells may be configured. In the present disclosure, a candidate cell may be interpreted as a target cell, an additional cell, or an additional PCI. One or more candidate cells (or a candidate cell group) may be separately associated with respective serving cells, or one or more candidate cells (or a candidate cell group) may be associated with a plurality of serving cells in common.

Configuration of candidate cells (or a candidate cell group) may be configured similarly to inter-cell beam management (inter-cell BM) of existing systems (for example, Rel. 17 or earlier versions) by using a certain higher layer parameter (for example, ServingCellConfig). Alternatively, for configuration of candidate cells (or a candidate cell group), a framework for carrier aggregation configuration (for example, CA configuration framework) or a framework for CHO (Conditional Handover)/CPC (Conditional PSCell Change) configuration may be reused.

Regarding candidate cells (or a candidate cell group) configured by a higher layer parameter, activation/deactivation may be indicated to the UE by a MAC CE/DCI.

As configuration of candidate cells (or association with serving cells), for example, at least one of the following configuration example 1 to configuration example 3 may be applied. Here, shown is an example of SpCell #0, SCell #1, and SCell #2 being configured as serving cells and candidate cells/a candidate cell group being configured separately from the serving cells. The following configuration example 1 to configuration example 3 are an example, and the number of serving cells/the number of candidate cells/the number of candidate cell groups, association between the serving cells and the candidate cells, and the like are not limited to this and may be changed as appropriate. Alternatively, another configuration example(s) may be supported/employed in addition to/instead of configuration example 1 to configuration example 3.

### {Configuration Example 1}

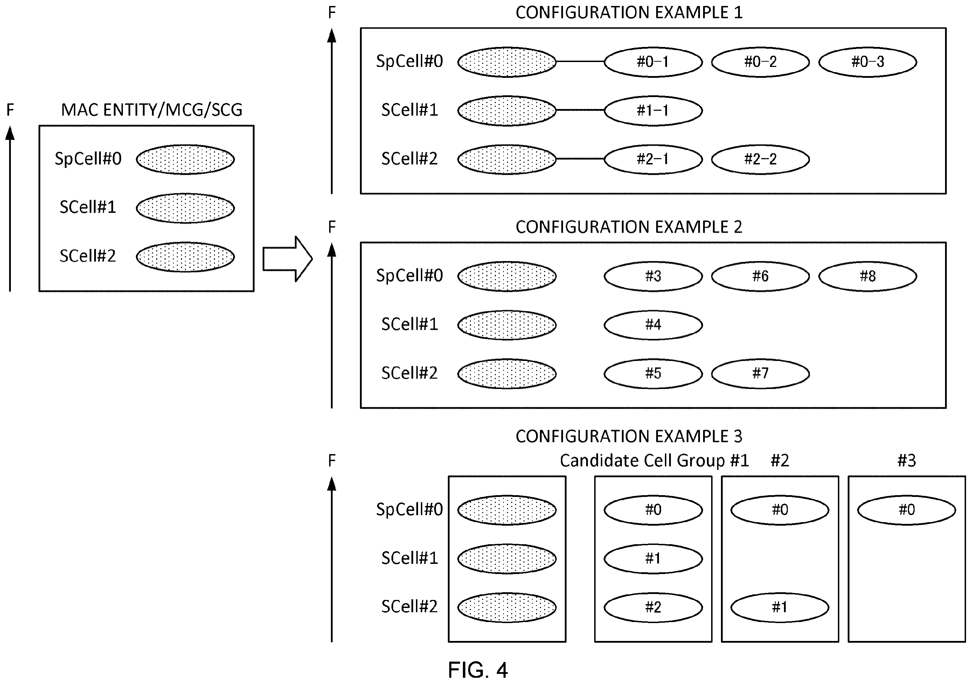

In configuration example 1, one or more candidate cells are respectively associated with/configured for each serving cell (or a frequency domain corresponding to each serving cell) (see FIG. 4). Here, shown is a case where candidate cells #0-1, #0-2, and #0-3 are associated with SpCell #0 (or a frequency domain corresponding to SpCell #0), candidate cell #1-1 is associated with SCell #1 (or a frequency domain corresponding to SCell #1), and candidate cells #2-1 and #2-2 are associated with SCell #2 (or a frequency domain corresponding to SpCell #2). Information related to the association may be configured/indicated from the base station to the UE by RRC/MAC CE/DCI.

### {Configuration Example 2}

In configuration example 2, candidate cells are associated with/configured for a MAC entity/MCG/SCG (see FIG. 4). Here, shown is a case where candidate cells #3 to #8 are associated with a MAC entity/MCG/SCG. In this case, instead of a candidate cell(s) being associated with each serving cell, the candidate cells are configured for the MAC entity or cell group (for example, an MCG/SCG). Information related to the candidate cell(s) configured for each cell may be configured/indicated from the base station to the UE by RRC/MAC CE/DCI.

### {Configuration Example 3}

In configuration example 3, one or more candidate cell groups are configured (see FIG. 4). Each candidate cell group includes one or more candidate cells. Here, shown is a case where candidate cell group #1 including candidate cells #0 to #2, candidate cell group #2 including candidate cells #0 and #1, and candidate cell group #3 including candidate cell #0 are configured. At least one of information related to the candidate cell groups to be configured and information related to the candidate cell(s) included in each candidate cell group may be configured/indicated from the base station to the UE by RRC/MAC CE/DCI.

### {Serving Cell Switching}

In existing systems (for example, Rel. 17), L1 beam indication for a TCI state of an additional PCI (or an additional cell) (for example, indication by a TCI state field of DCI) is supported.

It is assumed, in Rel. 18 or later versions, that a new L1/L2 signal (for example, DCI/MAC CE) indicating switching of a serving cell (for example, serving cell switch) is supported. It may be assumed that, as the indication, at least one of implicit indication and explicit indication is supported. The implicit indication may mean that a certain CORESET is updated to a TCI state associated with an additional PCI by a MAC CE, for example. The explicit indication may mean that cell switching is directly indicated by DCI/MAC CE.

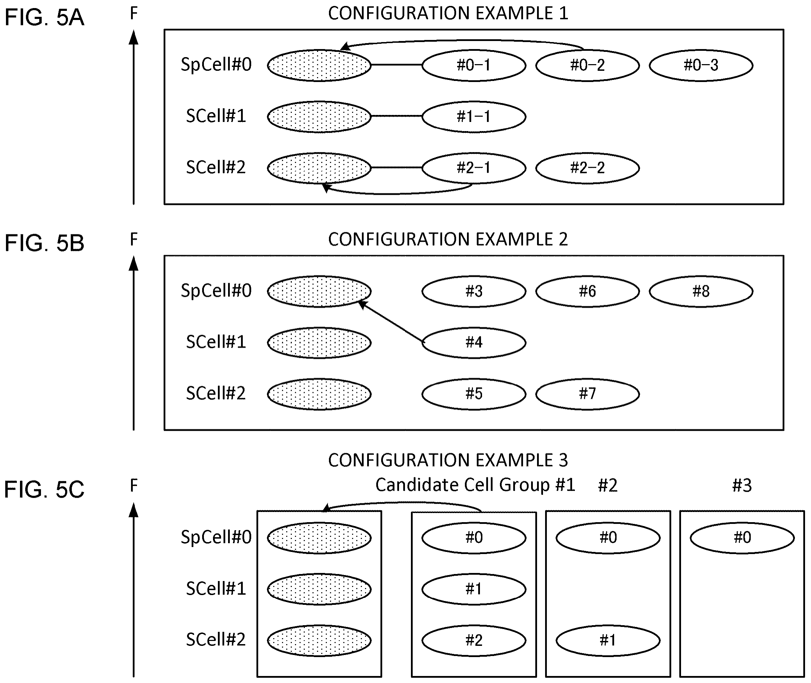

For example, in configuration example 1 of candidate cells, a certain candidate cell may be specified as a serving cell (or indicated for switching with a serving cell) via L1/L2 signaling. FIG. 5A shows a case where candidate cell #0-2 turns to be an SpCell of the MCG/SCG (SpCell #0 and candidate cell #0-2 are switched) by L1/L2 signaling. Also shown is a case where candidate cell #2-1 turns to be an SCell of an MCG/SCG (SCell #2 and candidate cell #2-1 are switched) by L1/L2 signaling.

Alternatively, in configuration example 2 of candidate cells, a certain candidate cell may be specified as a serving cell (or indicated for switching with a serving cell) via L1/L2 signaling. FIG. 5B shows a case where candidate cell #4 turns to be an SpCell of an MCG/SCG (SpCell #0 and candidate cell #4 are switched) by L1/L2 signaling.

Alternatively, in configuration example 3 of candidate cells, a certain candidate cell group (or one or more candidate cells included in the certain candidate cell group) may be changed/updated to a serving cell group via L1/L2 signaling. FIG. 5C shows a case where candidate cell group #1 (or candidate cells #0 to #2 included in candidate cell group #1) turns to be a serving cell group (or the serving cell group and candidate cell group #1 are switched) by L1/L2 signaling. Of the candidate cells (here, candidate cells #0 to #2) included in candidate cell group #1, the candidate cell associated with SpCell #0 or the candidate cell (here, candidate cell #0) configured for the same frequency domain as that of SpCell #0 may be configured as a new SpCell. Alternatively, the candidate cell to turn to be the SpCell may be indicated by L1/L2 signaling.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG. A timing advance group including an SpCell of a MAC entity may be referred to as a primary timing advance group (PTAG), and a TAG other than the PTAG may be referred to as a secondary timing advance group (STAG).

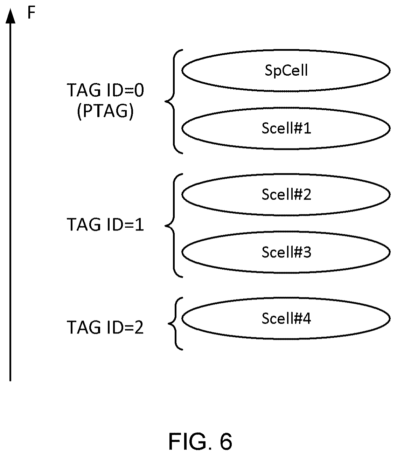

In existing systems (for example, Rel-16 NR), configuration of four TAGs at maximum (for example, MCG/SCG) is supported for each cell group (see FIG. 6). FIG. 6 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command is signaled from a radio base station to the UE on a MAC layer. The UE controls a certain timer (for example, a TA timer), based on reception of the TA command.

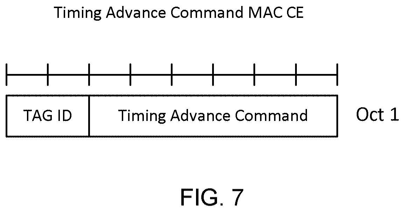

A MAC CE for timing advance command (TAC MAC CE) may have a structure including a field for timing advance group index (for example, TAG ID) and a field for timing advance command (see FIG. 7).

On the other hand, a case is assumed that, in future radio communication systems, a different TAG (or TAG-ID) is configured for each of one or more TRPs corresponding to a certain cell (or CC). For example, regarding multi-TRP operation using multi-DCI, it is assumed that two TAs (or TAGs) are supported for UL transmission.

Alternatively, a case is assumed that different TRPs corresponding to a certain cell share a common TAG. Alternatively, a case where the MAC CE for TA command is applied to only one TRP or a case where the MAC CE for TA command is applied to a plurality of TRPs is assumed.

Alternatively, a case is also assumed that TRPs corresponding to different cells use different TAGs/share a common TAG. For example, it is also assumed that UL transmission is controlled based on common/different timing advance for a serving cell (or a TRP of the serving cell) and a non-serving cell (or a TRP of the non-serving cell) in inter-cell mobility.

In this manner, it is also assumed that, in MIMO of Rel. 18 or later versions, two timing advances (TAs) for two TRPs are supported in multi-TRP operation using multi-DCI.

When the TAG is configured/controlled in a unit of a TRP, a time alignment timer (for example, timeAlignmentTimer) may be configured for each TRP. The time alignment timer may control time in which the MAC entity considers that the serving cell belonging to an associated TAG is uplink time aligned (for example, uplink time aligned). For example, in order to maintain (for example, maintenance) a UL time alignment, the time alignment timer may be configured by RRC.

The time alignment timer (for example, timeAlignementTimer) may be maintained for the UL time alignment. In Rel. 17, the time alignment timer (for example, timeAlignementTimer) corresponds to each TAG. When the UE has received a MAC CE for timing advance command (for example, a TAC MAC CE), the UE starts or restarts a time alignment timer related to each indicated timing advance group (for example, TAG).

When a MAC entity receives the TAC MAC CE, and a certain value (N_{TA}) is maintained for the indicated TAG, the MAC entity uses the timing advance command for the indicated TAG or starts or restarts the time alignment timer related to the indicated TAG. The certain value (N_{TA}) may be timing advance between DL and UL.

Operation when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, in Rel. 17, certain operation for PTAG is employed when a timing advance timer corresponding to a PTAG expires, and certain operation for STAG may be employed when a timing advance timer for STAG expires.

For example, when such a time alignment timer expires, the following operation (for example, the certain operation for PTAG/certain operation for STAG) may be performed.

### {Certain Operation for PTAG}

In a case where the time alignment timer is associated with a PTAG,
- flush (discard) all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Certain Operation for STAG}

In a case where the time alignment timer is associated with an STAG, for all serving cells belonging to the TAG,
- flush (discard) all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

When candidate cells are configured/defined, communication may be supported to be controlled in consideration of timing advances (TAs) corresponding to the respective candidate cells. As described above, each candidate cell may be associated with a TAG, for example.

When candidate cells are configured/applied/supported, it is assumed that different serving cells/different candidate cells are associated with the same TAG. The TAG for the candidate cells may be indicated by the base station, or may be judged based on a TA for the candidate cells acquired by the UE.

It is also conceivable that the UE performs, for UL transmission for candidate cells (for example, candidate cells with indication of switching to a serving cell), UL transmission in consideration of a TA corresponding to the candidate cells. When considering the TA for the candidate cells, the UE is required to perform TA acquisition for the candidate cells (for example, TA acquisition of candidate cells).

As the TA acquisition for the candidate cells, a plurality of TA acquisition methods, such as TA acquisition using a RACH (for example, RACH-based solutions) and TA acquisition without using a RACH (RACH-less solutions), are conceivable. The TA acquisition methods may be interpreted as TA acquisition schemes, TA acquisition types, or TA acquisition procedures. In the present disclosure, TA acquisition, TA measurement, TA calculation, TA computation, and TA determination may be interchangeably interpreted.

For example, the UE may acquire a TA for a candidate cell by transmitting, to the candidate cell, a RACH (for example, a PDCCH order RACH) indicated/triggered by a PDCCH. Information (for example, a TA value) related to the TA for the candidate cell may be included in a response signal of the RACH (for example, RAR). The RAR may be transmitted from a serving cell or a candidate cell. Alternatively, a TA for a candidate cell may be acquired by using a RACH triggered by the UE or a RACH triggered from a network via a higher layer. The PDCCH order may be triggered by only a source cell (or serving cell).

Alternatively, the UE may acquire a TA for a candidate cell by transmitting, to the candidate cell, a signal other than a RACH. Information (for example, a TA value) related to the TA for the candidate cell may be indicated from the base station to the UE. As the signal other than the RACH, an SRS may be applied, for example.

Alternatively, the UE may measure/calculate/acquire a TA for a candidate cell, based on a DL signal (for example, a downlink reference signal) transmitted from each cell (for example, candidate cell/serving cell). The method in which the UE acquires a TA for a candidate cell, based on a DL signal transmitted from one or more cells, may be referred to as UE based TA measurement.

In the UE based TA measurement, the downlink reference signal may be a certain DL signal (for example, a synchronization signal block (for example, SSB)/CSI-RS or the like). For example, the UE may measure a difference between timings of DL signal receptions from a plurality of cells (or two cells) to obtain a TA for a candidate cell.

The plurality of cells may include a cell (for example, a serving cell) to be a reference. In this case, the UE may calculate a TA necessary for the candidate cell, based on a reception timing in a reference cell (and a TA value for the reference cell) and a timing difference between the reference cell and the candidate cell (for example, T). The UE may acquire a TA for the candidate cell by using a timing advance command (TAC) transmitted from a serving cell.

### (TA Control in Unit of TRP/Panel)

As described above, when communication is performed using a plurality of transmission/reception points (for example, TRPs)/panels, it is also assumed to control timing advance (TA) for each TRP/for each panel.

In NR of Rel. 18 or later versions, it is considered that, regarding a RACH triggered by a PDCCH order and a RACH triggered by the UE, contention based random access (CBRA)/contention free random access (CFRA) is considered/determined in a unit of a TRP or in a unit of a TRP TA (TA of each TRP).

When application/configuration of timing advance is supported for each TRP (or for each TRP), the UE controls UL transmission (for example, RACH transmission or the like) in each TRP, based on timing advance corresponding to each TRP (or timing advance group to which each TRP belongs).

Information (for example, a TRP index/TRP ID) related to the TRP corresponding to each serving cell may be configured/indicated from the base station to the UE using RRC/MAC CE/downlink control information. The UE may receive related information related to timing advance corresponding to each TRP (for example, information related to a TA value/timing advance command/time alignment timer or the like) from the base station.

Each embodiment of the present disclosure may be applied/supported in at least one of an intra-cell multi-TRP (Intra-cell M-TRP) and an inter-cell multi-TRP (Inter-cell M-TRP).

In the intra-cell multi-TRP, a plurality of TRPs (or activated TCI states of a plurality of TRPs) may be associated with the same cell ID. The cell ID may be a physical cell ID (PCI).

In the inter-cell multi-TRP, a plurality of TRPs (or activated TCI states of a plurality of TRPs) may be associated with different cell IDs (for example, PCIs). For example, in the inter-cell multi-TRP, two TRPs may be interpreted as two TRPs respectively associated with two PCIs.

When application/configuration of timing advance is supported for each TRP (or in a unit of a TRP), each TRP may belong to a different TAG. A plurality of TRPs (for example, two TRPs) in the serving cell may respectively belong to two TAGs. The TAG may include a plurality of TRPs from a plurality of serving cells. All of the TRPs/serving cells in the TAG apply/maintain the same timing advance (TA)/same time alignment timer.

In the present disclosure, one or more sub-TAGs may be included in the TAG. For example, two TRPs in the serving cell may respectively belong to two sub-TAGs, and may belong to one TAG. The sub-TAG may include a plurality of TRPs from a plurality of serving cells. All of the TRPs/serving cells in the sub-TAG apply/maintain the same timing advance (TA)/same time alignment timer.

For example, the TA may be applied to each TRP (or indication in a unit of TRP TA may be performed). For example, at least one of the following options may be applied.

### {Option 1}

A different TAG-ID may be configured for each TRP, and a different MAC CE for TA command may be configured for each TRP. Each TAG may maintain the time alignment timer for UL time alignment.

### {Option 2}

Different TRPs may share the TAG. The MAC CE for TA command may be applied to only one TRP. The UE applies different TA to another TRP. For example, the UE may adjust the TA value for another TRP (for example, TRP #1) by a TA offset (TA_TRP_offset), based on TA for TRP #0 (TA_TRP #0).

In this case, only one time alignment timer may be present for the UL time alignment of a plurality of TRPs. This may mean that the UL time alignment of a plurality of TRPs is simultaneously maintained or lost.

### {Option 3}

A single TAG may be provided. A MAC CE for TA command may be applied to a plurality of serving TRPs for the UE.

### {Option 4}

A single TAG may be provided. A MAC CE for TA command received in the TRP/CW/PDSCH/DMRS port group may be applied to the same TRP/CW/PDSCH/DMRS port group of the TAG. Each TRP/CW/PDSCH/DMRS port group of the TAG maintains the time alignment timer for UL time alignment.

In this manner, it is also assumed that, in Rel. 18 or later versions, a plurality of timing advances are supported in the multi-TRP (for example, the multi-TRP using multi-DCI). For example, a plurality of (for example, two) timing advances may be supported for the multi-TRP (for example, two TRPs) using multi-DCI. Application of a plurality of timing advances for the multi-TRP may be supported in an intra-cell/inter-cell multi-DCI multi-TRP scenario, or may be supported in a plurality of frequency ranges (for example, FR1 and FR2).

### (PDCCH Order)

DCI format 1_0 includes a DCI format indicator field, a bit field always set to 1, and a frequency domain resource assignment field. When a cyclic redundancy check (CRC) with DCI format 1_0 is scrambled by a C-RNTI, and all frequency domain resource assignment fields are 1, this DCI format 1_0 is for random access procedure initiated by a PDCCH order, and remaining fields are a random access preamble, a UL/supplementary Uplink (SUL) indicator, an SS/PBCH index (SSB index), a PRACH mask index, and a reserved bit (12 bits).

In a case of PRACH transmission triggered by the PDCCH order, when a value of a random access preamble index field is non-zero, a PRACH mask index field indicates a PRACH occasion for PRACH transmission for which a PRACH occasion is associated with an SS/PBCH block index indicated by an SS/PBCH block index field with the PDCCH order.

### (RACH Procedure Triggered by PDCCH Order)

In existing systems (for example, Rel. 17 or earlier versions), regarding RACH procedure for a specific cell (for example, an SpCell), a UE performs, for a PDCCH order RACH, RACH procedure by assuming that a PDCCH order and a PDCCH for RAR have the same QCL properties. The PDCCH for RAR may be a PDCCH transmitted by a base station in response to a PRACH triggered for the UE by the PDCCH order (or transmitted from the UE). A PDSCH scheduled by the PDCCH for RAR may include an RAR. The QCL properties may be interpreted as DMRS QCL properties.

Specifically, when the UE detects, in response to PRACH transmission initiated by a PDCCH order for triggering a CFRA procedure for an SpCell, DCI format 1_0 CRC scrambled by a corresponding RA-RNTI, the UE may assume that a PDCCH including DCI format 1_0 and the PDCCH order have the same DMRS antenna port quasi-co-location properties.

Note that, in RAR monitoring not triggered by the PDCCH order, QCL of a CORESET for transmitting the RAR may be the same as that of an SSB/CSI-RS used for the PRACH.

In the existing systems (for example, Rel. 17 or earlier versions), regarding RACH procedure for another cell (for example, an SCell), such a restriction on the specific cell is absent, and the UE is supported to use QCL of a certain CORESET for reception of the PDCCH for RAR. The certain CORESET may be a CORESET associated with a type 1 CSS set (for example, a type 1-PDCCH CSS set).

Specifically, when the UE detects, in response to PRACH transmission initiated by a PDDCCH order for triggering a CFRA procedure for an SCell, DCI format 1_0 CRC scrambled by a corresponding RA-RNTI, the UE may assume DMRS antenna port quasi-co-location properties of a CORESET associated with a type 1-PDCCH CSS set for reception of a PDCCH including DCI format 1_0.

In this manner, in RAR monitoring for a PDCCH order RACH for an SCell, QCL of a CORESET for RAR may be associated with a type 1-PDCCH CSS set.

Incidentally, in order to acquire a TA of each TRP (or a TA of the serving cell and the non-serving cell), a RACH of each TRP (or each serving cell/non-serving cell) may be triggered. A case is also considered where, for a PDCCH order triggering a RACH procedure for the TRP (or the serving cell/non-serving cell), a PDCCH order and a PDCCH for RAR are transmitted from different TRPs. In such a case, it is necessary that a restriction that a PDCCH order and a PDCCH for RAR have the same DMRS QCL properties is relaxed/changed.

For example, it may be supported that a PDCCH order from TRP #1 triggers a RACH for TRP #2, and an RAR is transmitted from TRP #2. In this case, a RACH for any TRP can be triggered via a PDCCH order from any TRP, and flexibility of the RACH procedure can be enhanced.

As another example, it may be supported that a PDCCH order from TRP #2 may trigger a RACH for TRP #2, and an RAR is transmitted from TRP #1. This example may occur in the inter-cell multi-TRP (for example, inter-cell M-TRP) case when the UE cannot receive a type 1 CSS set from the TRP of the non-serving cell.

In the above-described RACH procedure triggered by the PDCCH order, the UE may be configured/indicated with reception of an RAR.

For example, if the reception of an RAR is not configured/indicated, a timing advance (value) of a candidate cell may be indicated by a cell switch command.

Studies have also been carried out on the following.
- Whether UE does not need to retransmit PRACH when reception of RAR is not configured/indicated
- How UE determines transmission power for subsequent PRACH triggered by PDCCH order
- Which of serving cell or is target cell (candidate cell) UE has received RAR from when reception of RAR is not configured/indicated
- Whether UE is configured with type 1-PDCCH CSS (set) for target cell when UE is configured with RAR reception from target cell
- Specific content of RAR
- Signaling for configuring/indicating whether RAR needs to be received
- Introduction of UE capability to support RAR being included/not being included

It is assumed that a UL TA is acquired before the cell switch command is received. If a TA is indicated for the UE (for example, by the above-described RAR (for a PDCCH order RACH)) before the cell switch command is received, the TA does not need to be indicated by a MAC CE for cell switch command. On the other hand, when an RAR is configured to be unnecessary for the UE, the TA needs to be indicated by the MAC CE for cell switch command.

### (Random Access Procedure in MAC Entity)

A random access procedure is initiated by RRC for an event following a PDCCH order, a MAC entity itself, or a specification. In the MAC entity, only one ongoing random access procedure is present at an any timing. A random access procedure for an SCell is initiated only by a PDCCH order with ra-PreambleIndex different from 0b000000.

When the random access procedure is initiated on a serving cell, the MAC entity performs the following.
- Configuring RA_TYPE as 4-stepRA when a random access procedure is initiated by a PDCCH order, and ra-PreambleIndex explicitly provided by a PDCCH is not 0b000000 or when a random access procedure is initiated for reconfiguration with synchronization, and a contention-free random access resource of a 4-step RA type is explicitly provided by rach-ConfigDedicated for a BWP selected for the random access procedure.

When selected RA_TYPE is configured as 4-stepRA, the MAC entity performs the following.
- Setting PREAMBLE_INDEX to notified ra-PreambleIndex and selecting an SSB notified by the PDCCH, when ra-PreambleIndex is explicitly provided from the PDCCH, and ra-PreambleIndex is not 0b000000, and
- determining, when the SSB is selected in such a manner as that described above, a subsequent available PRACH occasion among PRACH occasions corresponding to the selected SSB and allowed by a restriction given by ra-ssb-OccasionMaskIndex (The MAC entity randomly selects, with equal probability, a PRACH occasion from consecutive PRACH occasions corresponding to the selected SSB, in accordance with a specification. The MAC entity may, when determining the subsequent available PRACH occasion corresponding to the selected SSB, consider a possibility of occurrence of a measurement gap).

For example, when a new random access procedure is initiated while another random access procedure is already in progress in the MAC entity, whether to continue the ongoing procedure or initiate the new procedure (such as an SI request) depends on UE implementation.

When an ongoing random access procedure triggered by a certain PDCCH order is present while the UE is receiving another PDCCH order indicating the same random access preamble, PRACH mask index, and UL carrier, the procedure is regarded as the same random access procedure as that in progress and is not reinitialized.

### (Activation/Deactivation of SCell)

When the MAC entity is configured with one or more SCells, a network (NW) can activate/deactivate the configured SCell(s). After the SCell(s) is configured, the SCell(s) remains deactivated as long as a parameter (sCellState) is not configured to be activated for the SCell(s), by a higher layer.

The configured one or plurality of SCells may be activated/deactivated based on at least one of the following conditions:
- An SCell Activation/Deactivation MAC CE is received.
- An enhanced SCell Activation/Deactivation MAC CE is received.
- A timer (sCellDeactivationTimer) is configured for each SCell (except for an SCell configured with a PUCCH). Note that, when the timer expires, the relevant SCell is deactivated.
- sCellState is configured for each configured SCell. In this case, the relevant SCell is activated based on an SCell configuration.

When the SCell is deactivated, the UE may perform/assume the following operations:
- Transmit no SRS of the SCell.
- Report no CSI of the SCell.
- Transmit no UL-SCH in the SCell.
- Transmit no RACH in the SCell.
- Monitor no PDCCH in the SCell.
- Monitor no PDCCH for the SCell.
- Transmit no PUCCH in the SCell.

HARQ feedback for MAC Protocol Data Unit (PDU) including the SCell Activation/Deactivation MAC CE or the Enhanced SCell Activation/Deactivation MAC CE is not affected by interruption of a PCell/PSCell/PUCCH-SCell caused by the Scell activation/deactivation. On the other hand, when the SCell is deactivated, an ongoing random access procedure in the SCell, if any, is interrupted.

### (Time <Timeline> Between PDCCH Order Reception and PRACH Transmission)

If a random access procedure has been initiated by a PDCCH order, the UE transmits, if requested by a higher layer, a PRACH in a selected PRACH occasion in a case where time between a last symbol for PDCCH order reception and a first symbol for PRACH transmission is N_(T, 2) + Δ_BWPSwitching + Δ_Delay + T_switch [msec] or greater (time condition), as described in a specification. Here, N_(T, 2) is duration of an N_2 symbol corresponding to PUSCH preparation time for UE processing capability 1. µ corresponds to an SCS configuration for the PRACH transmission. For example, assume that µ corresponds to a minimum SCS configuration between a subcarrier spacing (SCS) configuration for the PDCCH order and an SCS configuration for the PRACH transmission corresponding to the PDCCH order. Δ_BWPSwitching = 0 when an active UL BWP does not change, otherwise Δ_BWPSwitching is defined in a specification. In FR1, Δ_delay = 0.5 msec, and in FR2, Δ_delay = 0.25 msec. T_switch is switching gap duration defined in a specification.

When the UE is provided with K_{cell,offset} by CellSpecific_Koffset, the PRACH occasion is after slot n+2^{µ}·K_{cell,offset}. Here, n is the slot for the UL BWP for the PRACH transmission overlapping an end of the PDCCH order reception based on the assumption that T_{TA} = 0. µ corresponds to an SCS configuration for the PRACH transmission. When PDCCH reception for the PDCCH order includes two PDCCH candidates from two search space sets linked to each other based on searchSpaceLinkingId, a final symbol for the PDCCH reception is a final symbol for the PDCCH candidate to be ended later. Even in a case where the UE does not need to monitor any one of the two PDCCH candidates, the PDCCH reception includes the two PDCCH candidates.

When the UE attempts to detect, in response to PRACH transmission initiated by a PDCCH order for triggering a CFRA procedure for an SpCell, DCI format 1_0 with a CRC scrambled by a corresponding RA-RNTI, the UE may assume that a PDCCH including DCI format 1_0 and the PDCCH order have the same DM-RS antenna port QCL properties.

When the UE attempts to detect, in response to PRACH transmission initiated by a PDDCCH order for triggering a CFRA procedure for an SCell, DCI format 1_0 with a CRC scrambled by a corresponding RA-RNTI, the UE may assume DMRS antenna port QCL properties of a CORESET associated with a type 1-PDCCH CSS set configured for reception of a PDCCH including DCI format 1_0.

In this manner, a timing of the PRACH occasion is associated with µ and CellSpecific_Koffset.

### (RACH Procedure for Non-Serving Cell for L1/L2-Centric Inter-Cell Mobility)

When RRC configures one or more pieces of non-serving cell information for the UE, a RACH configuration for a non-serving cell(s) may be included. Examples of a case where a RACH for a candidate cell triggered by a PDCCH order is supported include Options 1 to 3 below.

### <Option 1>

The UE may judge, based on a certain parameter used for a PDCCH with a PDCCH order, a cell to which the PDCCH order (or a PRACH transmitted in response to the PDCCH order) corresponds. The certain parameter may be, for example, a TCI state.

For example, when the base station transmits a PDCCH order for a PRACH, and a PDCCH (or DCI/CORESET) is associated with a TCI state from a non-serving cell, the PRACH requested by the PDCCH order may correspond to the non-serving cell. In this case, the UE may control PRACH transmission, based on a PRACH configuration for the non-serving cell. Subsequently, the UE may judge a TA of the non-serving cell, based on DL transmission (for example, RAR) fed back for the PRACH transmission.

When the PDCCH (or DCI/CORESET) is associated with a TCI state from a serving cell, the PRACH requested by the PDCCH order may correspond to the serving cell. In this case, the UE may control PRACH transmission, based on a PRACH configuration for the serving cell. Subsequently, the UE may judge a TA of the serving cell, based on DL transmission (for example, RAR) fed back for the PRACH transmission.

### <Option 2>

The UE may judge, based on DCI (or a CORESET) used for a PDCCH order, a cell to which the PDCCH order (or a PRACH transmitted in response to the PDCCH order) corresponds.

For example, the UE may be notified of the DCI used for the PDCCH order including identification information (for example, a cell index/cell type (for example, serving cell/non-serving cell)) on the cell to which the PRACH corresponds. In a certain DCI format used for the PDCCH order (for example, DCI format 1_0), to explicitly indicate a serving cell/non-serving cell to which the PRACH corresponds, X reserved bits of the DCI may be used to notify the cell. The reserved bits may be reserved bits included in DCI format 1_0 in an existing system (for example, Rel. 15/16).

A bit size of X may be configured/judged/determined based on the number of configured non-serving cells. For example, X may be 1 bit when one non-serving cell is configured. In this case, '0' and '1' may indicate a serving cell and a non-serving cell, respectively. The most significant bit (MSB) or least significant bit (LSB) of reserved bits may be applied to a field used to notify the cell identification information.

X may be 2 bits when three non-serving cells are configured. To indicate the non-serving cell, a re-indexing non-serving cell index may be applied. Association between the cell index and a bit value (or a codepoint) may be defined in a specification or may be configured by higher layer signaling or the like. For example, a codepoint '0' or '00' may indicate a serving cell, and remaining bits may be associated in order (for example, increasing/decreasing order) of indices of the configured non-serving cells.

Alternatively, the size of X may be fixed, and the number of bits may not be changed, irrespective of the number of configured non-serving cells. In this case, an unused bit/field may be configured as a reserved bit.

### <Option 3>

In a case where a random access preamble index (for example, ra-PreambleIndex) is a certain value (for example, 0 to 63), part of a preamble may be configured/activated to be associated with a non-serving cell, by RRC/MAC CE.

In this case, a certain field of a certain DCI format (for example, DCI format 1_0) may indicate information on a serving cell/non-serving cell. The certain field may be, for example, a random access preamble index field. Note that the preamble configuration associated with the non-serving cell may be applied to only PRACH transmission based on a PDCCH order (or may not be applied to contention-based PRACH transmission).

When DCI indicates a preamble associated with a non-serving cell, the UE may perform control so as to perform PRACH transmission with the indicated preamble in accordance with a RACH configuration for the non-serving cell.

The UE may adjust a TA of indicated one or more cells after a PRACH based on the PDCCH order. Information related to the TA may be received via a response signal (for example, RAR) for the PRACH transmission.

### (Per-TRP RACH Procedure in Multi-TRP)

Incidentally, for such RACH procedure for each TRP (or TRP TA) in multi-TRP as that described above, studies have not sufficiently been made on how to perform the RACH procedure.

For example, in a RACH procedure for a candidate cell triggered by a PDCCH order, it is unclear which cell the PDCCH order for the candidate cell is transmitted on. The candidate cell is not limited to an SpCell/PCell, and an SCell can also be the candidate cell.

For example, it is unclear how transmission of a PDCCH order for a non-active (inactive) cell/inactive candidate cell is treated. Note that, in an existing system, a UE does not perform PDCCH monitoring on an inactive cell.

When PDCCH orders are transmitted on respective cells, the UE needs to monitor PDCCHs (for at least PDCCH orders) for a plurality of candidate cells. Furthermore, there is a possibility that the UE does not recognize which candidate cell a PDCCH order is to be monitored for.

The NW can transmit, for PRACHs, two PDCCH orders for two cells, but indication of a preamble/mask (PRACH mask index)/UL carrier is the same (common), and thus an existing rule is inappropriate (inapplicable). For example, in a case where an ongoing random access procedure triggered by a certain PDCCH order is present, even when the UE receives another PDCCH order indicating the same random access preamble/PRACH mask index/UL carrier, the procedure is regarded as the same random access procedure as that in progress and is not reinitialized.

### <Option 1>

A PDCCH order transmitted to the UE on certain cell #A may trigger a PRACH on this cell #A. For example, when the NW attempts to trigger a RACH on candidate cell #A, the NW needs to transmit a PDCCH order on candidate cell #A.

In the present disclosure, cells #A and #B are candidate cells, and may each be any one of an SpCell/PCell/SCell unless otherwise specified.

### {Option 1-1}

The NW may support PDCCH order transmission/PDCCH monitoring/PRACH transmission on a non-active (inactive) cell/inactive candidate cell. In this case, the NW does not need to indicate, to the UE, an ID of the candidate cell to trigger a RACH.

### {Option 1-2}

The UE may judge whether a PDCCH needs to be monitored/a candidate cell for which a PDCCH is to be monitored, based on at least one of options below.

### {Option 1-2-1}

The NW may configure, by using RRC/MAC CE, a candidate cell/TAG/reference CC per TAG/candidate cell per TAG for which the UE needs to monitor a PDCCH (including at least a PDCCH order/DCI format 1_0). The UE may judge, based on the RRC/MAC CE, the candidate cell/TAG/reference CC per TAG/candidate cell per TAG for which the UE needs to perform the monitoring. The candidate cell may include an inactive SCell.

For a candidate cell (including an inactive SCell)/TAG/reference CC per TAG indicated by the NW, the UE may monitor a PDCCH order. For another candidate cell, the UE may not monitor a PDCCH order. Here, the reference CC per TAG may mean that it is only necessary that the NW/UE acquires, for all the cells in the TAG, a TA based on this reference CC.

### {Option 1-2-2}

A PDCCH order transmitted to the UE on certain cell #A may trigger a PRACH on cell #B different from this cell #A (which will be described below in detail in a second embodiment).

### {Option 1-2-3}

The UE may judge, based on a certain rule, a candidate cell for which PDCCH monitoring is to be performed. The certain rule may be at least one of the following:
- Candidate cell configured with L1 beam measurement/reporting
- Candidate cell configured with active TCI state/TRS/CSI measurement/reporting
- Candidate cell (per TAG) with lowest cell ID, among candidate cells described above

In this case, the UE only needs to determine one candidate cell for which PDCCH monitoring is to be performed for each TAG.

### {Variations}

In Options 1-1 and 1-2, the UE monitors a specific DCI format (for example, DCI format 1_0 with a CRC scrambled by a corresponding RA-RNTI/C-RNTI) on a candidate cell (inactive cell/configured cell). This reduces the number of BDs, thereby allowing UE load to be reduced. Meanwhile, this is not restrictive. For example, the UE may monitor any DCI format scrambled by any RNTI.

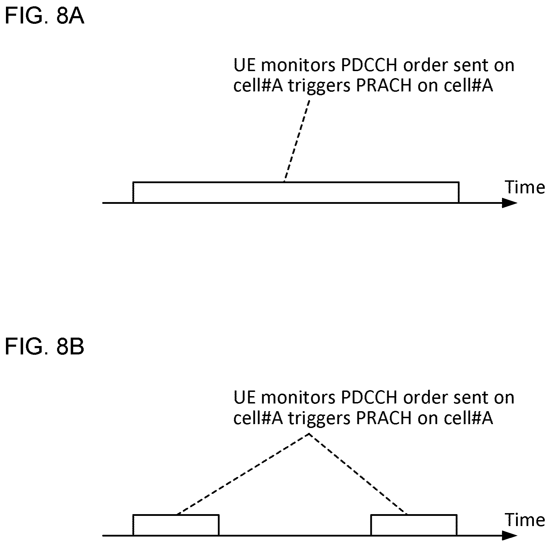

FIGS. 8A and 8B are diagrams to show examples of a timing of the PDCCH monitoring according to Option 1. The UE may receive the PDCCH order transmitted on cell #A, at a timing shown in any one of FIGS. 8A and 8B.

As shown in FIG. 8A, the UE may receive the PDCCH order at any timing, for example. In this case, the UE needs to always monitor a PDCCH even when an SCell is deactivated.

As shown in FIG. 8B, the UE may receive the PDCCH order at a certain specific timing. In this case, it is only necessary that the UE monitors a PDCCH in a certain specific duration (specific time duration). The monitoring duration/non-monitoring duration may be predetermined in a specification or may be configured/indicated by RRC/MAC CE/DCI. The certain specific duration may be any one of the same duration as a DRX duration (On duration of DRX), some parts of the DRX duration, or a duration including the DRX duration.

According to Option 1, a UE can appropriately judge, in a RACH procedure, which cell a PDCCH order for a candidate cell is transmitted on.

### <Option 2>

Option 2 relates to a case where a PDCCH order transmitted to the UE on certain cell #A triggers a PRACH on another cell #B different from this cell #A. Cells #A and #B may belong to the same MCG/SCG, and may belong to the same TAG.

### {Option 2-0}

In this option, a RACH may be triggered for the UE, based on at least one of options below.

### {Option 2-0-1}

Any active serving cell (cell #A) may trigger the RACH for a candidate cell (cell #B (which may be another serving cell)).

### {Option 2-0-2}

Only cell #A as an SPCell may trigger the RACH for a candidate cell (cell #B).

### {Option 2-0-3}

Only a (activated) scheduling cell (cell #A) may trigger the RACH for a scheduled cell (cell #B) associated with this cell #A. The association between cells #A and #B (for example, based on cross-carrier scheduling) may be configured/indicated by RRC.

A maximum number of scheduling cells may be defined for the scheduling cell (cell #A).

Assuming that a new carrier indicator field (CIF) in the PDCCH order indicates a scheduled cell ID, a value of the CIF used in the PDCCH order for one scheduled cell (cell #B) may be explicitly configured via RRC, and a plurality of values of the CIF used in the PDCCH order for a plurality of scheduled cells may be implicitly determined based on the order of cell indices/PCIs of the plurality of scheduled cells. In the implicit determination, a smaller cell index/PCI may be mapped to a smaller CIF value, for example.

### {Option 2-0-4}

Cell #A that can trigger the RACH (for each TAG) may be explicitly/implicitly configured by RRC/MAC CE or may be predefined in a specification. For example, a cell with the lowest cell ID per TAG/CG (cell group) or an active cell with the lowest cell ID per TAG/CG (cell group) may be this cell #A (cell that can trigger the RACH).

According to Option 2-0, the UE does not need to monitor a PDCCH order on an inactive cell/many cells. In this case, PRACH transmission on an inactive cell/inactive candidate cell may be supported.

To indicate a target cell with the PRACH, DCI including a PDCCH order may indicate a target cell ID/BWP ID/frequency.

The NW can indicate, by using the DCI including the PDCCH order, a plurality of target cells. The UE may select one cell, based on the DCI, to trigger a RACH.

In the present disclosure, the PDCCH order may be included (applied) not only in (to) DCI format 1_0, but also in (to) another DCI format, such as DCI formats 1_1, 1_2, and 2_X.

### {Option 2-1}

In a case where an ongoing random access procedure triggered by a certain PDCCH order is present, even when the UE receives another PDCCH order indicating the same target cell ID/BWP ID/center frequency/random access preamble/PRACH mask index/UL carrier, the procedure is regarded as the same random access procedure as that in progress and is not reinitialized.

According to Option 2, a UE can appropriately judge, based on a new rule, triggering of a RACH by a PDCCH order for a candidate cell.

For example, it has been agreed that, for the purpose of reduction of latency/interruption of handover, a UE performs, on a candidate cell, the following procedures before receiving an L1/L2 cell switch command:
- DL synchronization for candidate cell
- TRS tracking for candidate cell
- CSI acquisition for candidate cell
- TCI state activation/selection for candidate cell

Studies have been carried out on whether the above-described procedures can also be performed in a case where a candidate cell is an inactive SCell.

Meanwhile, considering a scenario between distribution nodes (Distribution Units (DUs), it is assumed that some of the procedures fail on the candidate cell before the UE receives a cell switch command. For example, it is assumed that the UE performs some of the procedures only after receiving a cell switch command. In this case, for these functions/procedures on the candidate cell, a problem of how to notify and control UE operation is conceivable.

Thus, a new parameter related to specific function/procedure may be introduced before the UE receives a cell switch command.

The new parameter may be a parameter indicating whether specific function/procedure can be performed. In a case where the UE is provided with a configuration for a plurality of candidate cells via RRC signaling, the new parameter may be configured for each candidate cell.

### {Aspect 1}

For example, the new parameter may indicate, by using 1-bit information (0 or 1), whether specific function/procedure can be performed (Option 1). When a field "1" of the new parameter is indicated, the UE may perform a set of predefined/preconfigured functions/procedures before receiving a cell switch command (may assume that the set can be performed). When a field "0" of the new parameter is indicated, the UE may not perform a set of predefined/preconfigured functions/procedures before receiving a cell switch command (may assume that the set cannot be performed).

Another new parameter may be defined to indicate a set of different functions/procedures (Option 2). Defining such another new parameter (indicating different functions/procedures) requires information with different bits.

Such another new parameter (which may be simply referred to as a parameter) may indicate that each candidate cell and a current serving cell are present in (belong to) a distribution node (for example, a Distributed Unit (DU))/central node (Central Unit (CU)) or different DUs/CUs. This parameter allows a UE to be indicated with whether specific procedure can be performed, before reception of a cell switch command.

For example, when a field "0" of the parameter is configured for a candidate cell, the UE may not assume that signaling from a NW triggers, for the candidate cell, unexpected functions/procedures, or may, even when receiving signaling from the NW, ignore triggering of these functions/procedures.

For example, the field "0" of the parameter may indicate (may mean) that "CSI acquisition for the candidate cell is not allowed before reception of a cell switch command." In this case, the UE may, if CSI measurement configuration by RRC includes a candidate cell indicated by the field "0" of the parameter, ignore CSI measurement/CSI reporting for the candidate cell.

The predefined/preconfigured functions/procedures in each set may include at least one of the following:
- DL synchronization for candidate cell
- TRS tracking for candidate cell
- L1 beam acquisition or CSI acquisition for candidate cell (result of measurement of periodic, semi-persistent, or aperiodic CSI-RS in candidate cell)
- TCI state activation/selection for candidate cell
- PRACH transmission in candidate cell
- SRS transmission in candidate cell
- Monitoring of PDCCH (corresponding to certain specific format or CORESET/SS) in candidate cell

As a variation, RRC/MAC CE may select at least one of the predefined/preconfigured functions/procedures. DCI/MAC CE may indicate/activate whether a set of the selected functions/procedures is to be applied to each candidate cell. For example, DCI including a PDCCH order may be used for the indication. Which candidate cell is to be explicitly indicated may be indicated by RRC/MAC CE/DCI or may be implicitly associated with a candidate cell for a triggered PRACH.

### {Aspect 2}

When the UE receives a cell switch command by using DCI/MAC CE, a set of predefined/preconfigured functions/procedures/RSs may be triggered or activated for an indicated target cell. The target cell may be a candidate cell.

For example, for functions/procedures/RSs indicated by the field "0" of the new parameter described above (note, however, that configurations of these functions/procedures/RSs are provided by RRC), the UE may, if the cell switch command is a command for the target cell, assume that the functions/procedures/RSs have been triggered/activated for the target cell. In this case, configurations of the functions/procedures/RSs indicated by the field "0" of the new parameter may be provided by RRC.

When a cell switch command is transmitted from the NW to the UE, the cell switch command may include an explicit indication of triggering/activation of a set of some functions/procedures/RSs.

For example, to reduce wait time (latency) for data transmission in the target cell after the UE receives the cell switch command, functions/procedures necessary for the data transmission are required to be performed as soon as possible when not being performed before the cell switch command.

Content of an existing MAC CE may include, as a new cell switch command, at least one of the following to trigger some functions/procedures:
- activation/deactivation of SCell/candidate cell
- aperiodic CSI trigger state for target cell
- activation of aperiodic CSI-RS/Channel State Information-Interference Measurement (CSI-IM) resource set for target cell
- activation of TCI state for PDCCH/PDSCH for target cell
- timing advance command (TA command) for target cell

Some existing DCI indications may include, as a new cell switch command, at least one of the following to trigger some functions/procedures.
- PDCCH order for triggering RACH for target cell
- indication for triggering aperiodic CSI report for target cell

Another new indication may include at least one of the following:
- higher layer in which RACH is triggered in case where CFRA/CBRA PRACH configuration is enabled
- activation of configuration related to L1/CSI
measurement/reporting

In this manner, using such a new parameter allows TRS tracking and TCI state activation/deactivation for a candidate cell to be performed before a UE receives a cell switch command, for example.

### (Outline of L1L2-triggered mobility (LTM))

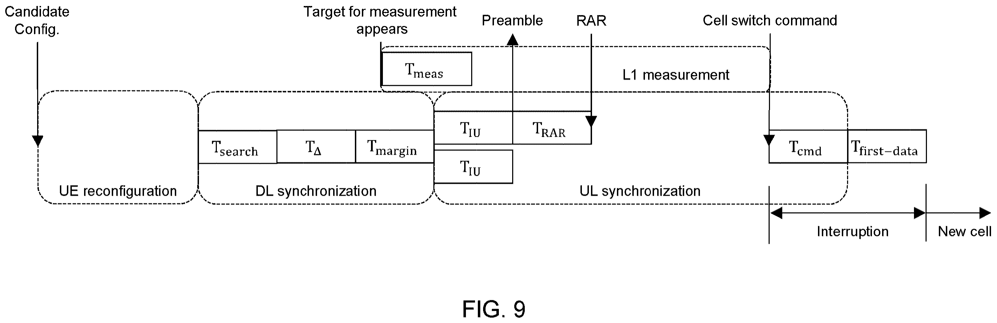

FIG. 9 is a diagram to show an outline of L1L2-triggered mobility (LTM). LTM and L1/L2 inter-cell mobility may be interchangeably interpreted. The UE receives, from the NW, candidate cell configurations in UE reconfiguration. The UE reconfiguration includes T_{RRC}, T_{processing1}/T_{processing2}. T_{RRC} (for example, up to 10 ms) is processing time for RRC reconfiguration that delivers candidate cell configurations (candidate configurations) . T_{processing1}/T_{processing2} (for example, up to 20 ms for the same FR, up to 40 ms for different FRs) are time for respective UE processings before and after a cell switch command. This may include, for some cases, L2/3 reconfiguration, RF re-tuning, baseband re-tuning, security update, if necessary, and the like.

DL synchronization includes T_{search}, T_{Δ}, and T_{margin}. T_{search} (for example, 0 ms in a case where a cell is known, up to 60 ms in a case where a cell is unknown) is time necessary for a target cell search. T_{L} is time for fine tracking and all timing information acquisition. T_{margin} (for example, up to 2 ms) is time for post-processing of an SSB and a CSI-RS.

L1 measurement includes Tₘₑₐₛ (SMTC periodicity, (for example, 20 ms)). Tₘₑₐₛ is measurement latency from the appearance of a target to a cell switch command.

UL synchronization includes T_{IU}, T_{RAR}, and T_{cmd}. T_{IU} (for example, up to 15 ms) is time for uncertain interruption in acquisition of the first available PRACH occasion in a new cell. T_{RAR} (for example, up to 4 ms) is time for RAR latency. T_{cmd} (for example, up to 5 ms) is time for processing of L1/L2 command (HARQ and paging).

T_{first-data} after T_{cmd} is time for the UE to perform, after an RAR, the first DL reception/UL transmission on an indicated beam of a target cell.

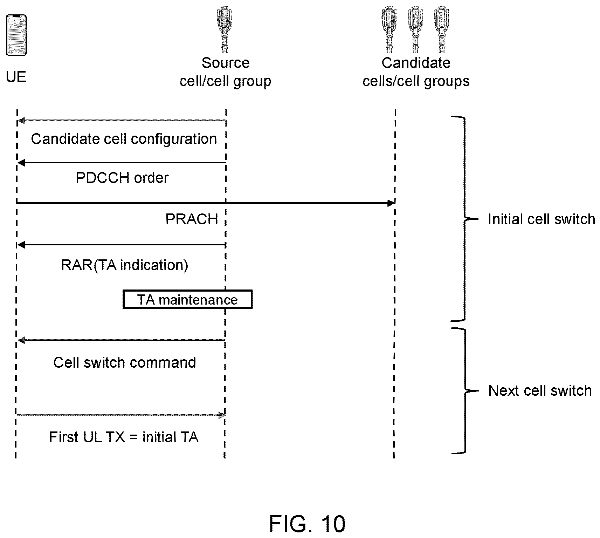

FIG. 10 is a diagram to show a PDCCH indication-based RACH (PDCCH ordered RACH) with random access response (RAR) monitoring for serving cell. Note that, in the present disclosure, a source cell and a source cell group may be interchangeably interpreted. A candidate cell and a candidate cell group may be interchangeably interpreted.

A source cell transmits a candidate cell configuration to the UE. The source cell transmits, to the UE, a RACH indication based on a PDCCH (including, for example, DCI format 1_0) (PDCCH order). Note that, in the indication, a parallel RAR is complicated, and thus one candidate cell is indicated. The UE transmits a PRACH in RACH procedure to the candidate cell, for TAG/TA acquisition.

Next, the source cell transmits an RAR (TA indication) to the UE. In this case, only one common search space (CSS) is configured, and thus the RAR is monitored in an SpCell (only in a Distributed Unit (DU)). The UE may perform transmission/reception in a current serving cell. In the source cell, TA adjustment is performed.

Next, the source cell transmits a cell switch command to the UE. At this time, TA information can be moved from the source cell to a target cell. In this case, there is a possibility that UL synchronization for all candidate cells has not been completed after the first cell switch. The UE performs the first UL transmission by using an initial TA.

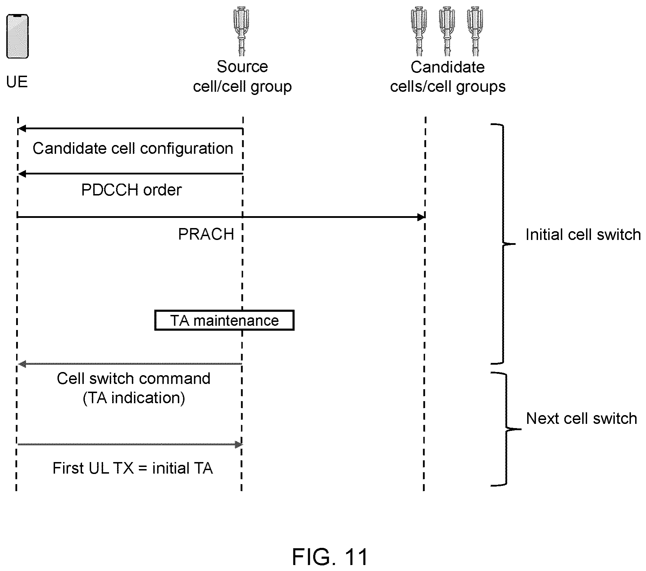

FIG. 11 is a diagram to show a PDCCH indication-based RACH (PDCCH ordered RACH) without random access response (RAR) monitoring for serving cell. Only the difference between FIG. 11 and FIG. 10 will be described. In an example of FIG. 11, PDCCH based RACH indication (PDCCH order) may indicate a plurality of candidate cells. The UE may transmit a PRACH in RACH procedure to the candidate cells, for acquisition of a plurality of TAGs/TAs. The source cell does not transmit an RAR, and transmits a TA indication in a cell switch command.

In the present disclosure, a RACH without an RAR may be interpreted as a RACH without RAR monitoring. A RACH may be interpreted as PRACH transmission triggered by a PDCCH order. RACH procedure/PRACH transmission without RAR monitoring may be interpreted as RACH procedure/PRACH transmission not requiring RAR monitoring, or RACH procedure/PRACH transmission in which RAR monitoring is not requested.

For LTM, each candidate cell configuration may include at least a higher layer parameter "CellGroupConfig" and a configuration ID.

LTM supports a case that a candidate cell configuration is a delta configuration at the top of a reference configuration. Here, in relation to the delta configuration, the UE stores the reference configuration as another configuration. In other words, the reference configuration may be managed separately. For example, for a delta configuration for a candidate cell, another reference configuration may be provided.

A MAC CE including LTM-related information for cell switching may be used as a trigger for LTM cell switching. The LTM cell switching may be monitored by a timer.
A MAC CE for cell switch command may be used to indicate a connection to a target cell.

In LTM, the target cell (PCell/SCell) may be a current SCell/PCell. In other words, the current SCell/PCell (serving cell) may be configured as a candidate cell.

### (MAC CE for Cell Switch Command)

The MAC CE for cell switch command may include at least one of the following information.
- Information for identifying target cell
- Information related to TA
- Beam indication for target cell (SpCell)
- Active DL/UL BWP ID for target cell (SpCell)
- Triggering of aperiodic TRS transmitted from target cell
- Triggering of CSI acquisition for target cell, report for target cell
- Triggering of aperiodic SRS transmission for target cell
- Presence of field corresponding to information described above (for example, whether the field is always present, whether the field can be configured)
- Bit size of each field

### (RAR Format)

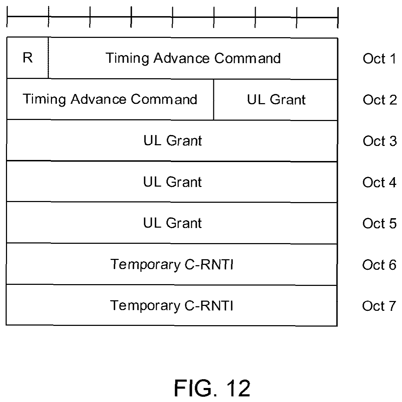

FIG. 12 is a diagram to show an example of configuration of an existing RAR format (MAC RAR). As shown in FIG. 12, the existing MAC RAR may be constituted, for example, by 7 octets (= 56 bits). Specifically, the MAC RAR may include a 1-bit reserved (R) field, a 12-bit TAC field, a 27-bit UL grant field, and a 16-bit Temporary Cell Radio Network Temporary Identifier (TC-RNTI) field.

The TAC field may include information for adjusting a timing of uplink transmission, and the TC-RNTI field may include temporary information for identifying a terminal (temporary terminal identifier).

### (Analysis)

### <Analysis 1>

As described above, studies have been carried out on the UE operation before reception of the cell switch command. On the other hand, even in a case where the UE performs UL synchronization before receiving the cell switch command, depending on some problem, the NW (base station) may fail to acquire a TA of a target candidate cell when judging transmission of a cell switch command MAC CE. Here, the some problem includes, for example, a case where a PDCCH order has already been transmitted, but the NW has not yet decoded a PRACH, a case where the NW has not yet acquired a TA due to sudden degradation in quality of a serving cell, and the like.

Thus, it is necessary to support a cell switch command for triggering a PRACH for a target candidate cell.

### <Analysis 2>

As described above, the timeline between PDCCH order reception and PRACH transmission is defined. Here, in a case where a candidate cell is also a current active serving cell (which is defined as case 0), an existing timeline can be applied.

Meanwhile, in a case where a candidate cell is a current inactive serving cell (which is defined as case 1) or in a case where a candidate cell is not a current serving cell (which is defined as case 2), the candidate cell (in case 1/2) is regarded as deactivated, and a frequency different from that of a current active CC can be present. Accordingly, it is considered that, for case 1/2, the present timeline is inappropriate, and concept of an additional time (timeline/time sequence) is necessary.

### <Analysis 3>

There is a restriction on an RF chain of the UE. Thus, in a case where a candidate cell at a frequency different from that of a current active CC transmits, to the UE, a PDCCH order for triggering a PRACH, the UE needs to adjust, in certain one active serving cell, RF transmission (Tx) to the candidate cell. In this case, of course, interruption of a connection (communication) may occur in the current active serving cell. Here, it is necessary to clarify that the NW/UE have a common understanding/view of how and how long (time) a current serving cell is interrupted.

### <Analysis 4>

It is considered that primary usage of an RAR in LTM with a candidate cell is transmission of a TA to the UE. Here, it is necessary to study whether, when the RAR is configured for a PDCCH order RACH for the candidate cell, to directly apply an existing RAR or apply a new RAR format.

As described in these respective analyses, the plurality of study items are listed for a cell switch command for triggering a RACH for a candidate cell. Unless these are clear, appropriate control of cell switching may fail, which may cause communication quality degradation.

In view of this, the inventors of the present invention focused on a cell switch command for triggering a RACH for a candidate cell, and came up with the idea of one aspect of the present embodiment.

Embodiments according to the present disclosure will be described in detail with reference to the drawings as follows. The radio communication methods according to respective embodiments may each be employed individually, or may be employed in combination.

### (Various Interpretations and so on)

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, a TRP, a CORESET pool index (CORESETPoolIndex), a TRP ID, an ID related to a TRP, a TAG ID, a group of TCI states, a group of spatial relations, a group of QCL source RSs, a group of DL RSs, a group of path loss RSs, and a PCI (for an inter-cell multi-TRP) may be interchangeably interpreted.

In the present disclosure, being associated with a different TRP, being associated with a different CORESET pool index (CORESETPoolIndex), being associated with a different TRP ID, being associated with a different ID related to a TRP, being associated with a different TAG ID, being associated with a different group of TCI states, being associated with a different group of spatial relations, being associated with a different group of QCL source RSs, being associated with a different group of DL RSs, being associated with a different group of path loss RSs, and being associated with a different PCI (for an inter-cell multi-TRP) may be interchangeably interpreted.

Each embodiment of the present disclosure may be applied to at least one of an intra-cell multi-TRP and an inter-cell multi-TRP.

In the present disclosure, the intra-cell multi-TRP may mean that activated TCI states of a plurality of (for example, two) TRPs are associated with the same PCI.

In the present disclosure, the inter-cell multi-TRP may mean that activated TCI states of a plurality of (for example, two) TRPs are associated with different PCIs.

In the present disclosure, in a case of the inter-cell multi-TRP, a plurality of (for example, two) TRPs may mean a plurality of (for example, two) TRPs associated with a plurality of (for example, two) PCIs.

In the present disclosure, a non-serving cell, an additional cell, a candidate cell, and a target cell may be interchangeably interpreted.

In the present disclosure, L1/L2 inter-cell mobility, L1/L2 intra-cell mobility, and L1L2-triggered mobility (LTM) may be interchangeably interpreted.

The following embodiments may be applied when the RACH procedure of each TRP (or each serving cell/additional cell/non-serving cell) is configured/supported. Alternatively, the following embodiments may be applied when the timing advance/timing advance group of each TRP (or each serving cell/additional cell/non-serving cell) is configured/supported.

### (Radio Communication Method)

### <First Embodiment>

A first embodiment corresponds to Analysis 1 described above, and relates to a MAC CE (field) for cell switch command.

A UE may receive a MAC CE for cell switch command to trigger a RACH for a target candidate cell. The target candidate cell may be simply referred to as a candidate cell. The MAC CE for cell switch command may be simply referred to as a MAC CE. The MAC CE is used to indicate triggering of a RACH for a candidate cell, and may include at least one of the following fields. Note that the following fields primarily mean fields for indicating the above-described RACH. The MAC CE is not limited to the following fields, and may include a field for another usage.

Alt 1: an explicit field for indicating a RACH for an indicated candidate cell.

The field may be constituted by a 1-bit field (0 or 1) indicating the presence/absence of triggering of a RACH. When higher layer signaling related to candidate cell configuration configures CBRA for the candidate cell, the UE can perform the CBRA. When the higher layer signaling related to candidate cell configuration configures CFRA for the candidate cell, the UE can also perform the CFRA.
Alt 1-1: a 2-bit field indicating any one of non-RACH (non-application of a RACH)/CFRA/CBRA.
Alt 1-2: no explicit field is required. Another field (for example, an existing field) may be reused to indicate a RACH. For example, a TA field can be used. A special value of the TA field may be used to indicate any one of a RACH/CFRA/CBRA. For example, a field indicating the presence of the TA field may be additionally used to indicate triggering of a RACH.
Alt 1-3: the UE may, after receiving the MAC CE, judge triggering of a RACH, based on a specific condition. Here, the specific condition includes, for example, a case where no TA value is indicated for a cell switch command (a NW assumes that a TA is acquired/maintained for a candidate cell), a case where the UE judges that an SR resource configuration for UL data transmission is absent, a case where the UE judges that UL synchronization with a candidate cell has been lost, and the like.
Alt 2: an explicit field for indicating at least one of a PRACH preamble index, a PRACH mask index (for indicating a PRACH resource occasion), a beam index (SSB/CSI-RS), and a UL/SUL indication. Here, the MAC CE may be used to trigger a PDCCH order RACH. In this case, an additional beam index field is unnecessary, and another field, such as a beam index/TCI state field for an indicated candidate cell, can be reused. The presence or absence of a UL/SUL field may be indicated depending on whether a candidate cell can configure SUL.

According to the first embodiment described above, a UE can appropriately control triggering of a RACH for a candidate cell, based on a MAC CE for cell switch command.

### <Second Embodiment>

The second embodiment corresponds to Analysis 1 described above, and relates to reception of an RAR for the RACH triggered in the first embodiment.

A UE may, when having triggered the above-described RACH and having transmitted a PRACH to a candidate cell, receive an RAR from the following cells.
Opt 1: an original SpCell.
Opt 2: a target candidate cell. Note that a type 1-CSS (set) configuration may be provided by higher layer signaling related to candidate cell configuration.
Opt 3: a cell for receiving an RAR may be preconfigured by higher layer signaling or may be indicated by a MAC CE for cell switch command.
Opt 4: a cell for receiving an RAR may follow a predefined rule. For example, regarding an RAR for a RACH triggered before a cell switch command, the RAR may be monitored on an original SpCell. Regarding an RAR for a RACH triggered in/after reception of a cell switch command, the RAR may be monitored on a candidate cell indicated by a MAC CE for cell switch command.

Note that the second embodiment can also be applied to a PDCCH order RACH for a candidate cell.

According to the second embodiment described above, a UE can appropriately receive an RAR transmitted from a specific cell.

### <Third Embodiment>

A third embodiment corresponds to Analysis 2 described above, and relates to a time (timeline) between PDCCH order reception and PRACH transmission.

In case 1 (case where a candidate cell is a current inactive serving cell) and case 2 (case where a candidate cell is not a current serving cell) of Analysis 2 described above, as a time (timeline) from a last symbol for the PDCCH order reception to a first symbol for the PRACH transmission, an additional time Δ (delta) T (any one of options below) based on a current timeline may be defined.
Opt 1: ΔT that is the same for (common to) case 1/2.
Opt 2: ΔT that differs between case 1/2.

ΔT may include a time for change to an inactive candidate cell/time for change to a frequency different from that of a current active CC. ΔT may be predefined in a specification or may be configured for a candidate cell by higher layer signaling.

Note that the third embodiment can also be applied to a PDCCH order RACH for a candidate cell. The third embodiment can also be applied to a MAC CE that triggers a PDCCH order-like RACH for a candidate cell.

Variation: case 1 described above may be treated in a manner similar to that of case 0 (case where a candidate cell is also a current active serving cell). Only for case 2, a new (additional) timeline may be defined.

According to the third embodiment described above, a UE can judge a timeline related to PDCCH order reception and PRACH transmission, depending on an applied case.

### <Fourth Embodiment>

A fourth embodiment corresponds to Analysis 3 described above, and relates to a new higher layer parameter for indicating/configuring interruption of communication in cell switching.

The new higher layer parameter may indicate, in configuration of each candidate cell, which serving cell UL transmission is interrupted in when PRACH/SRS transmission to the candidate cell is performed, and may be at least one indication described below. The new higher layer parameter may be indicated as SwitchFromServCellIndex.
Variation 1: when a PRACH for a candidate cell is triggered, SwitchFromServCellIndex may be indicated by DCI for a PDCCH order.
Variation 2: in a case of a candidate cell at the same frequency as that of a serving cell, SwitchFromServCellIndex is predefined as one for the serving cell at the same frequency, and an explicit configuration is unnecessary. For only a candidate cell at a frequency different from that of the serving cell, SwitchFromServCellIndex may be configured/indicated.

A cell configured with SwitchFromServCellIndex may be a serving cell configured with PUCCH/PUSCH transmission in CA. The cell may be limited to an active serving cell. In this manner, a cell to which the parameter is to be applied may be limited.

When a PDCCH order RACH is triggered in a candidate cell, an interruption time in a serving cell with SwitchFromServCellIndex may be defined as N1 symbol(s) before a first symbol for a PRACH, a PRACH transmission duration, and N2 symbol(s) after a last symbol for the PRACH.

If the candidate cell, and the serving cell configured with SwitchFromServCellIndex have the same frequency, N1=0 and N2=0 can be supported.

When the candidate cell and the serving cell configured with SwitchFromServCellIndex have different frequencies, N1/N2 can be defined as greater values (which may be predefined in a specification or may be supported by a UE capability).

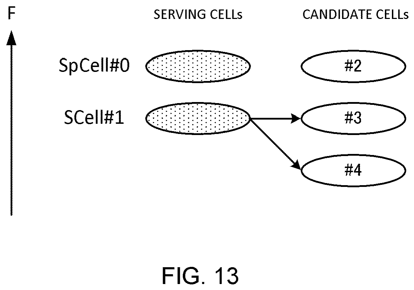

FIG. 13 is a diagram to show an example of switching from the serving cell to the candidate cell (target cell). As shown in FIG. 13, when SwitchFromServCellIndex configured for candidate cell #3 is the same as that for serving cell #1 (for example, SCell #1), an interruption time in serving cell #1 may be {PRACH duration}.

When SwitchFromServCellIndex configured for candidate cell #4 is the same as that for serving cell #1, an interruption time in serving cell #1 may be {PRACH duration + N1 + N2}. Here, N1 and N2 may be introduced as times necessary for antenna/RF switching.

According to the fourth embodiment described above, a UE can judge interruption of communication in cell switching, based on a new higher layer parameter.

### <Fifth Embodiment>

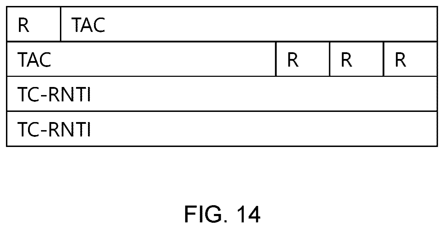

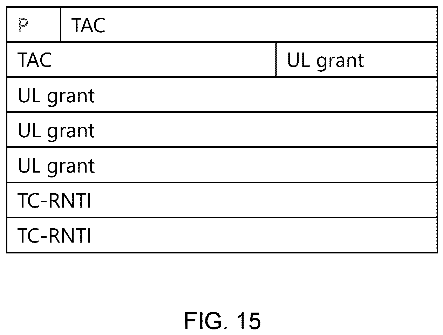

A fifth embodiment corresponds to Analysis 4 described above, and relates to a new RAR format. FIG. 14 is a diagram to show an example of the new RAR format (MAC RAR). FIG. 15 is a diagram to show another example of the new RAR format (MAC RAR). Note that the types of fields and the numbers of bits are merely examples, and can be changed appropriately.

When a PDCCH order RACH is triggered in a candidate cell, and reception of an RAR is configured, an RAR format to be applied may be at least one of options below.
Opt 1: an existing RAR format including a TAC, a UL grant, a TC-RNTI, and an R field may be reused (see, for example, FIG. 12).
Opt 2: a new RAR format may be defined (see, for example, FIG. 14 or FIG. 15).
Opt 2-1: based on the existing RAR format, the new RAR format may not include a UL grant field (see FIG. 14). In this case, fields included in the new RAR format may be only a TAC, a TC-RNTI, and R.
Opt 2-2: the new RAR format may not include a UL grant field and a TC-RNTI field, and may include only a TAC and R.
Opt 2-3: a cell ID indicating a candidate cell to which a TA is applied may be added to the new RAR format.

Note that the TC-RNTI may be a C-RNTI assigned to a UE in the candidate cell.

Which of the new RAR format or the existing RAR format is to be used may be configured by higher layer signaling (for each candidate cell/cell group or for all candidate cells) or may be predefined (for example, applying the existing RAR format to both a serving cell and a candidate cell, applying the new RAR format to a candidate cell being not a serving cell, or the like).

Which of the new RAR format or the existing RAR format is to be used may be indicated by the first R field of an RAR format, an LCID of a MAC RAR, or a PDCCH order.

Variation: the one new RAR format may include a plurality of TAC fields and a plurality of cell ID fields in an RAR to indicate TAs for a plurality of cells. As shown in FIG. 15, in place of the R field, a bit indicating any one of the new RAR format/existing RAR format, that is, a field (P field) indicating the presence or absence of the UL grant field may be included. The P field may indicate, for example, the presence of octets 3 to 5 of FIG. 15.

According to the fifth embodiment described above, a UE can appropriately control UL transmission (for example, timing advance), based on a new RAR format.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information for at least one of the embodiments above
- supporting of L1/L2 intra-cell mobility/L1/L2 inter-cell mobility
- supporting of a TA for each TRP in intra-cell/inter-cell multi-TRP
- supporting of configuration of intra-cell/inter-cell multi-TRP for a serving cell/non-serving cell
- supporting of change of a frame timing for a reference cell
- supporting of PDCCH monitoring for a candidate cell/inactive candidate cell/inactive SCell
- supporting of a maximum number of cells/TAGs/reference CCs as a target of PDCCH monitoring
- supporting of a cross-carrier (cross-CC) PDCCH order
- supporting of monitoring of an RAR for a candidate cell in a candidate cell/SpCell/SCell
- supporting of a maximum number of candidate cells/SpCells/SCells as a target of PDCCH monitoring
- supporting of performance of a set of specific functions/procedures in candidate cells (or inactive cells) before receiving an L1/L2 cell switch command and supporting of a maximum number of such cells
- supporting of a RACH trigger in cell switching
- supporting of a time (timeline) between PDCCH order reception and PRACH transmission in case 1/2
- supporting of the number of TA values possible to be stored by a UE for candidate cells/serving cells before reception of a cell switch command in LTM

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of random access procedure/PRACH transmission without RAR monitoring, any RRC parameter for a specific release (for example, Rel. 18/19), or the like.

In a case where the UE does not support at least one of the specific UE capability or is not configured with the specific information, the UE may apply, for example, Rel-15/16 operation.

### (Supplementary Notes)

Regarding one embodiment of the present disclosure, the following supplementary notes of the invention will be given.

### {Supplementary Note 1}

A terminal including:
a receiving section that receives a Medium Access Control Control Element (MAC CE) related to cell switching; and
a control section that controls, based on information included in the MAC CE, triggering of a random access channel (RACH) for a candidate cell, wherein
the MAC CE includes a field for indicating a RACH for an indicated candidate cell.

### {Supplementary Note 2}

The terminal according to supplementary note 1, wherein
the receiving section receives, from a specific cell, a random access response (RAR) for triggering of the RACH, and
the control section judges, based on higher layer signaling, the specific cell being a transmission source of the RAR.

### {Supplementary Note 3}

The terminal according to supplementary note 1 or 2, wherein the control section judges, based on higher layer signaling, a timeline related to physical downlink channel (PDCCH) order reception and physical random access channel (PRACH) transmission, or interruption of communication in cell switching.

### {Supplementary Note 4}

The terminal according to any one of supplementary notes 1 to 3, wherein
the receiving section receives a random access response (RAR) format for triggering of the RACH, and
the control section controls an uplink (UL) transmission timing advance, based on the RAR format.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

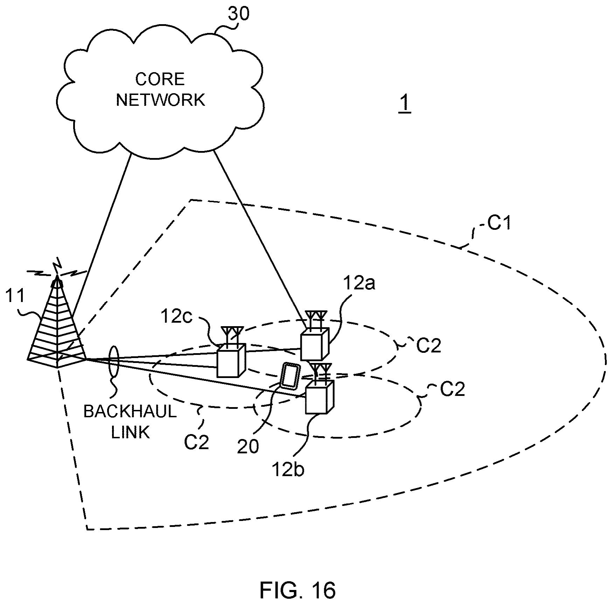

FIG. 16 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

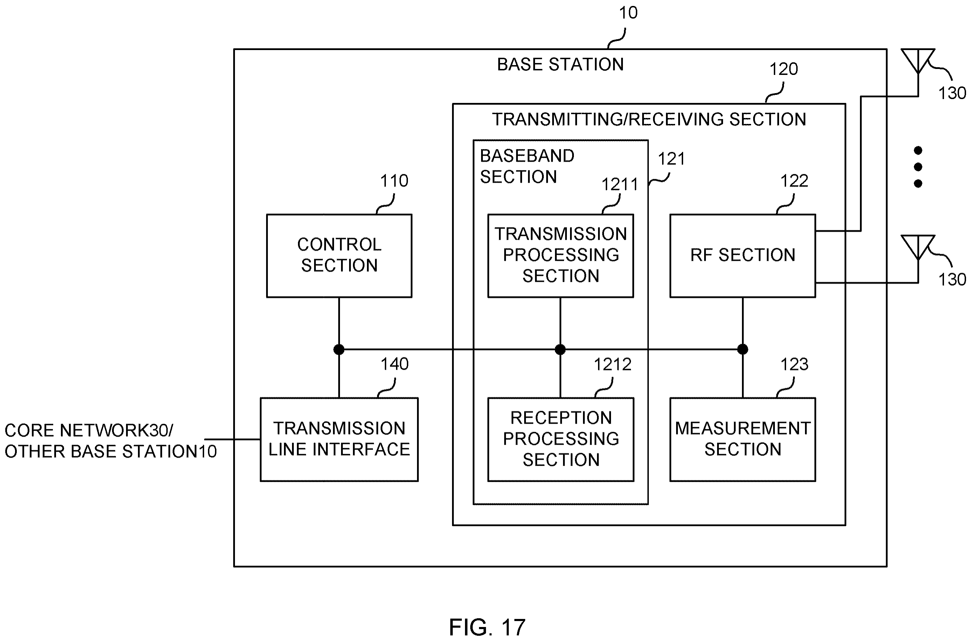

FIG. 17 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a Medium Access Control Control Element (MAC CE) related to cell switching. The transmitting/receiving section 120 may receive, from a terminal, a random access channel (RACH) triggered for a candidate cell, based on information included in the MAC CE.

### (User Terminal)

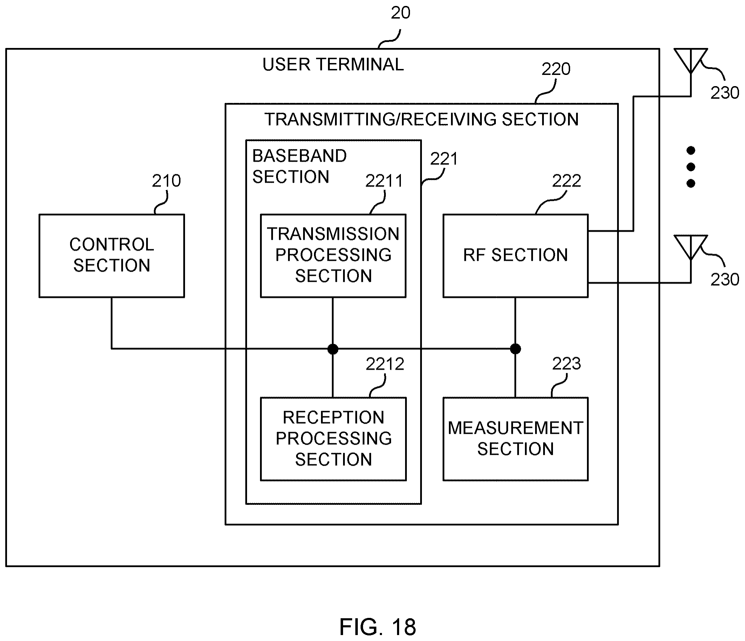

FIG. 18 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI computation, based on a channel measurement resource. The channel measurement resource may be, for example, a non-zero power (NZP) CSI-RS resource. The measurement section 223 may derive interference measurement for CSI computation, based on an interference measurement resource. The interference measurement resource may be at least one of an NZP CSI-RS resource for interference measurement, a CSI-interference measurement (IM) resource, and the like. Note that the CSI-IM may be referred to as CSI-interference management (IM), and may be interpreted as a zero power (ZP) CSI-RS, and vice versa. Note that, in the present disclosure, CSI-RS, NZP CSI-RS, ZP CSI-RS, CSI-IM, CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a Medium Access Control Control Element (MAC CE) related to cell switching. The MAC CE may include a field for indicating a RACH for an indicated candidate cell. The transmitting/receiving section 220 may receive, from a specific cell, a random access response (RAR) for triggering of the RACH. The transmitting/receiving section 220 may receive a random access response (RAR) format for triggering of the RACH.

The control section 210 may control, based on information included in the MAC CE, triggering of a random access channel (RACH) for a candidate cell. The control section 210 may judge, based on higher layer signaling, the specific cell being a transmission source of the RAR. The control section 210 may judge, based on higher layer signaling, a timeline related to physical downlink channel (PDCCH) order reception and physical random access channel (PRACH) transmission, or interruption of communication in cell switching. The control section 210 may control an uplink (UL) transmission timing advance, based on the RAR format.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

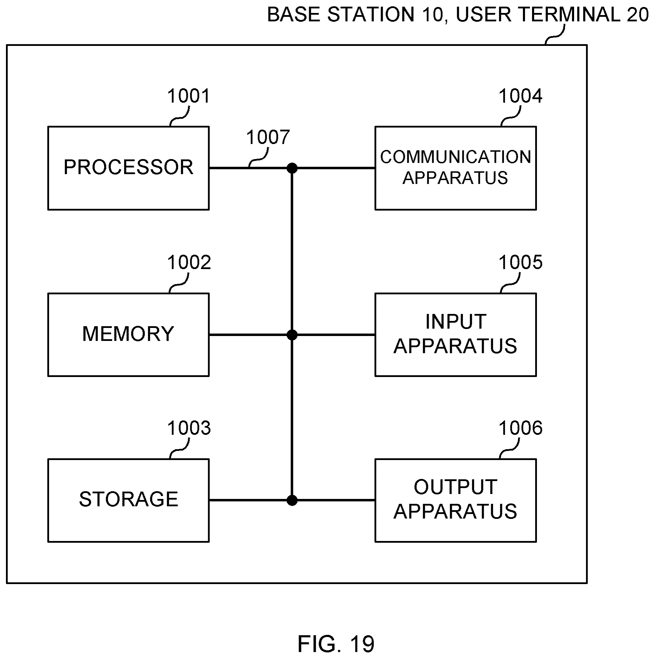

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

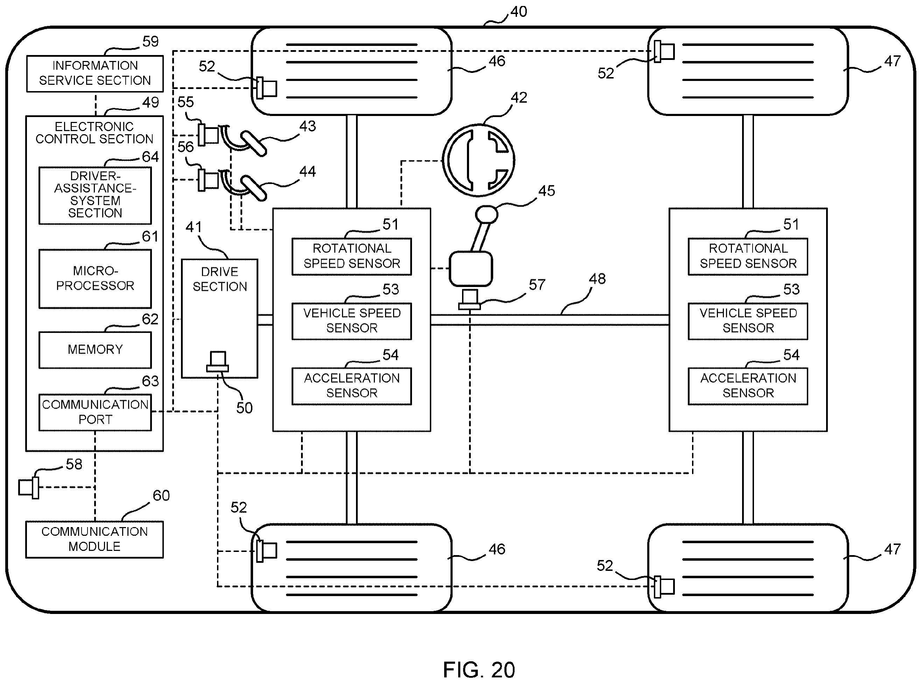

FIG. 20 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-32166, filed on March 2, 2023, the contents of which are incorporated herein by reference in their entirety.

## Claims

1. A terminal comprising:
a receiving section that receives a Medium Access Control Control Element (MAC CE) related to cell switching; and
a control section that controls, based on information included in the MAC CE, triggering of a random access channel (RACH) for a candidate cell, wherein
the MAC CE includes a field for indicating a RACH for an indicated candidate cell.

2. The terminal according to claim 1, wherein
the receiving section receives, from a specific cell, a random access response (RAR) for triggering of the RACH, and
the control section judges, based on higher layer signaling, the specific cell being a transmission source of the RAR.

3. The terminal according to claim 1, wherein
the control section judges, based on higher layer signaling, a timeline related to physical downlink channel (PDCCH) order reception and physical random access channel (PRACH) transmission, or interruption of communication in cell switching.

4. The terminal according to claim 1, wherein
the receiving section receives a random access response (RAR) format for triggering of the RACH, and
the control section controls an uplink (UL) transmission timing advance, based on the RAR format.

5. A radio communication method for a terminal, the radio communication method comprising:
receiving a Medium Access Control Control Element (MAC CE) related to cell switching; and
controlling, based on information included in the MAC CE, triggering of a random access channel (RACH) for a candidate cell, wherein
the MAC CE includes a field for indicating a RACH for an indicated candidate cell.

6. A base station comprising:
a transmitting section that transmits a Medium Access Control Control Element (MAC CE) related to cell switching; and
a receiving section that receives, from a terminal, a random access channel (RACH) triggered for a candidate cell, based on information included in the MAC CE, wherein
the MAC CE includes a field for indicating a RACH for an indicated candidate cell.
